# EUROPEAN PATENT APPLICATION

(11) **EP 3 641 390 A1**
(43) Date of publication of application: **22.04.2020**
(21) Application number: 18817929.5
(22) Date of filing: 15.06.2018
(51) Int. Cl.: H04W 28/18, H04L 27/26

(54) **BASE STATION DEVICE, TERMINAL DEVICE, AND COMMUNICATION METHOD THEREFOR**

(30) Priority: 15.06.2017 JP 2017117493
(71) Applicant: Sharp Kabushiki Kaisha, Sakai City, Osaka 590-8522 (JP)
(72) Inventor: YOSHIMOTO, Takashi, Osaka 590-8522 (JP); NAKAMURA, Osamu, Osaka 590-8522 (JP); GOTO, Jungo, Osaka 590-8522 (JP)
(74) Representative: Müller Hoffmann & Partner
(86) International application number: PCT/JP2018/022863
(87) International publication number: WO 2018/230694

(57) **Abstract**

A base station apparatus includes a transmitter configured to transmit configuration information related to selection of an MCS table to the terminal apparatus, and a controller configured to apply an MCS table selected based on the configuration information related to selection of the MCS table to configure an MCS index of a PDSCH. The MCS index is selected from a range of MCS indexes restricted to a part of MCSs within the MCS table. The range of MCS indexes restricted to the part of MCSs is a range of MCS indexes of values of n-th power of (1/2), and the range of MCS indexes of values of n-th power of (1/2) is variably controlled by the controller. The configuration information related to selection of the MCS table includes information for indicating which of a 64QAM mode MCS table and a 256QAM mode MCS table is to be applied.

## Description

### Technical Field

The present invention relates to a base station apparatus, a terminal apparatus, and a communication method for these apparatuses.

This application claims priority based on JP 2017-117493 filed on June 15, 2017, the contents of which are incorporated herein by reference.

### Background Art

In a communication system of Long Term Evolution (LTE) specified in the Third Generation Partnership Project (3GPP), radio resource allocation using Semi-Persistent Scheduling (SPS) is introduced (NPL 1). The SPS is used for transmission of voice packets (Voice over Internet Protocol (VoIP)) that periodically generate data. The voice packets and the like have a relatively small amount of data, but are required to be transmitted with a shot delay.

In 3GPP, as the fifth generation mobile communication systems (5G), specification of a radio multiple access scheme has been in progress. The radio multiple access scheme satisfies three use case requirements, specifically, enhanced Mobile Broadband (eMBB) for allowing high capacity communication with high spectral efficiency, massive Machine Type Communication (mMTC) for allowing accommodation of a large number of terminals, and Ultra-Reliable and Low Latency Communication (uRLLC) for realizing high reliability and low latency communication (NPL 2). These use cases assume remote control, such as a remote operation using a video, as well as voice calls. Thus, packets having various amounts of data may be periodically generated with long and short delays.

### Citation List

### Non Patent Literature

NPL 1: "3rd Generation Partnership Project; Technical Specification Group Radio Access Network; Evolved Universal Terrestrial Radio Access (E-UTRA); Physical layer procedures (Release 12)" 3GPP TS 36.213 v12.5.0 (2015-03)
NPL 2: "3rd Generation Partnership Project; Technical Specification Group Radio Access Network; Study on Scenarios and Requirements for Next Generation Access Technologies; (Release 14)" 3GPP TR 38.913 v0.3.0 (2016-03)

### Summary of Invention

### Technical Problem

One aspect of the present invention has been made in view of the circumstances as described above, and has an object to provide a base station apparatus, a terminal apparatus, and a communication method that enable selection of a modulation scheme and scheduling of radio resources, corresponding to packets having various amounts of data periodically generated with various delays.

### Solution to Problem

In order to solve the problems described above, a configuration of a base station apparatus, a terminal apparatus, and a communication method according to one aspect of the present invention is as follows.
(1) One aspect of the present invention is a base station apparatus for communicating with a terminal apparatus, the base station apparatus including: a transmitter configured to transmit configuration information related to selection of an MCS table to the terminal apparatus; and a controller configured to apply the MCS table selected based on the configuration information related to selection of the MCS table to configure an MCS index of a PDSCH, wherein the MCS index is information for indicating an MCS of the PDSCH, the MCS index is selected from a range of MCS indexes restricted to a part of MCSs within the MCS table, the controller configures multiple MCS selectable ranges including multiple MCS indexes selected out of the MCS table, the range of MCS indexes restricted to the part of MCSs is one of the multiple MCS selectable ranges that are variably controlled by the controller, the configuration information related to selection of the MCS table includes information for indicating which of a first MCS table and a second MCS table is to be applied, the first MCS table includes at least a first modulation scheme, and an MCS index associated with the first modulation scheme, the first modulation scheme includes QPSK, 16QAM, and 64QAM, the second MCS table includes at least a second modulation scheme, and the MCS index associated with the second modulation scheme, and the second modulation scheme includes the QPSK, the 16QAM, the 64QAM, and 256QAM.
(2) In one aspect of the present invention, the configuration information related to selection of the MCS table includes MCS restriction information, and the MCS restriction information is information for indicating the range of MCS indexes restricted to the part of MCSs.
(3) In one aspect of the present invention, the transmitter transmits a PDCCH including the MCS index of the PDSCH, in a case that the transmitter transmits a PDCCH to which a CRC scrambled with an SPS C-RNTI is added, the range of MCS indexes restricted to the part of MCSs is fixed to one of the multiple MCS selectable ranges, and a selectable range of MCS indexes of the PDSCH is changed by controlling the MCS table selected based on the configuration information related to selection of the MCS table.
(4) In one aspect of the present invention, the transmitter transmits a PDCCH including the MCS index of the PDSCH, in a case that a CRC scrambled with an SPS C-RNTI is added to the PDCCH, the controller applies the first MCS table to configure the MCS index of the PDSCH, irrespective of the configuration information related to selection of the MCS table, and the multiple MCS selectable ranges include MCS indexes selected from the first MCS table, and in a case that a CRC scrambled with a C-RNTI is added to the PDCCH, the controller applies the MCS table selected based on the configuration information related to selection of the MCS table, and configures the MCS index of the PDSCH out of all MCS indexes included in the MCS table.
(5) In one aspect of the present invention, the range of MCS indexes restricted to the part of MCSs is a range of MCS indexes of values of n-th power of (1/2), the transmitter transmits a PDCCH including the MCS index of the PDSCH, in a case that a CRC scrambled with an SPS C-RNTI is added to the PDCCH, the controller applies the first MCS table to configure the MCS index of the PDSCH, irrespective of the configuration information related to selection of the MCS table, and in a case that a CRC scrambled with a C-RNTI is added to the PDCCH, the controller configures the n to "1", and applies the MCS table selected based on the configuration information related to selection of the MCS table to configure the MCS index of the PDSCH.
(6) In one aspect of the present invention, the transmitter transmits a PDCCH including the MCS index of the PDSCH, and in a case that a CRC scrambled with an SPS C-RNTI is added to the PDCCH, and the n is 0, it is indicated that release of transmission of the PDSCH by using SPS is valid.
(7) In one aspect of the present invention, the transmitter transmits a PDCCH including the MCS index of the PDSCH, in a case that the transmitter transmits a PDCCH to which a CRC scrambled with an SPS C-RNTI is added, the range of MCS indexes restricted to the part of MCSs is fixed to one of values of n-th power of (1/2), and a selectable range of MCS indexes of the PDSCH is changed by controlling the MCS table selected based on the configuration information related to selection of the MCS table.
(8) In one aspect of the present invention, in a case that the transmitter transmits a PDCCH to which a CRC scrambled with an SPS C-RNTI is added, and n most significant bits among bits indicating the MCS index included in the PDCCH are set to "0", it is indicated that activation of transmission of the PDSCH by using SPS is valid.
(9) In one aspect of the present invention, in a case that the transmitter transmits a PDCCH to which the CRC scrambled with the SPS C-RNTI is added, and bits indicating the MCS index included in the PDCCH are set to all "1", it is indicated that release of transmission of the PDSCH by using SPS is valid.
(10) One aspect of the present invention is a communication method for a base station apparatus for communicating with a terminal apparatus, the communication method including: a transmission step of transmitting configuration information related to selection of an MCS table to the terminal apparatus; and a control step of applying the MCS table selected based on the configuration information related to selection of the MCS table to configure an MCS index of a PDSCH, wherein the MCS index is information for indicating an MCS of the PDSCH, the MCS index is selected from a range of MCS indexes restricted to a part of MCSs within the MCS table, the range of MCS indexes restricted to the part of MCSs is a range of MCS indexes of values of n-th power of (1/2), the range of MCS indexes of values of n-th power of (1/2) being variably controlled in the control step, the configuration information related to selection of the MCS table includes information for indicating which of a first MCS table and a second MCS table is to be applied, the first MCS table includes at least a first modulation scheme, and an MCS index associated with the first modulation scheme, the first modulation scheme includes QPSK, 16QAM, and 64QAM, the second MCS table includes at least a second modulation scheme, and the MCS index associated with the second modulation scheme, and the second modulation scheme includes the QPSK, the 16QAM, the 64QAM, and 256QAM.
(11) In one aspect of the present invention, the base station apparatus transmits a PDCCH including the MCS index of the PDSCH, in a case that a CRC scrambled with an SPS C-RNTI is added to the PDCCH, the range of MCS indexes restricted to the part of MCSs is fixed to one of the values of n-th power of (1/2), and a selectable range of MCS indexes of the PDSCH is changed by controlling the MCS table selected based on the configuration information related to selection of the MCS table.

### Advantageous Effects of Invention

According to one or more aspects of the present invention, a base station apparatus and a terminal apparatus can select a modulation scheme and schedule radio resources, corresponding to packets having various amounts of data periodically generated with various delays.

### Brief Description of Drawings

FIG. 1 is a diagram illustrating a configuration example of a communication system 1 according to a first embodiment.
FIG. 2 is a diagram illustrating an example of a CQI table according to a second embodiment.
FIG. 3 is a diagram illustrating another example of a CQI table according to the first embodiment.
FIG. 4 is a diagram illustrating an example of an MCS table according to the first embodiment.
FIG. 5 is a diagram illustrating another example of an MCS table according to the first embodiment.
FIG. 6 is a diagram illustrating an example of a radio frame configuration of the communication system 1 according to the first embodiment.
FIG. 7 is a diagram illustrating examples of a scheduling method according to the first embodiment.
FIG. 8 is a schematic block diagram of a configuration of a base station apparatus 10 according to the first embodiment.
FIG. 9 is a diagram illustrating a flow of MCS index configuration example in SPS according to the first embodiment.
FIG. 10 is a schematic block diagram illustrating a configuration of a terminal apparatus 20 according to the first embodiment.
FIG. 11 is a diagram illustrating a flow of MCS index configuration example in SPS according to a second embodiment.
FIG. 12 is an example illustrating parameters (fields) of DCI indicating validity of activation of SPS according to the second embodiment.
FIG. 13 is an example illustrating parameters (fields) of DCI indicating validity of deactivation of SPS according to the second embodiment.

### Description of Embodiments

A communication system according the present embodiments includes a base station apparatus (a cell, a small cell, a serving cell, a component carrier, an eNodeB, a Home eNodeB, or a gNodeB) and a terminal apparatus (a terminal, a mobile terminal, or a User Equipment (UE)). In the communication system, in case of a downlink, the base station apparatus serves as a transmitting apparatus (a transmission point, a transmit antenna group, a transmit antenna port group, or a Tx/Rx Point (TRP)), and the terminal apparatus serves as a receiving apparatus (a reception point, a reception terminal, a receive antenna group, or a receive antenna port group). In a case of an uplink, the base station apparatus serves as a receiving apparatus, and the terminal apparatus serves as a transmitting apparatus. The communication system is also applicable to Device-to-Device (D2D) communication. In this case, the terminal apparatus serves both as a transmitting apparatus and as a receiving apparatus.

The communication system is not limited to data communication between the terminal apparatus and the base station apparatus, the communication involving human beings, but is also applicable to a form of data communication requiring no human intervention, such as Machine Type Communication (MTC), Machine-to-Machine (M2M) Communication, communication for Internet of Things (IoT), or Narrow Band-IoT (NB-IoT) (hereinafter referred to as MTC). In this case, the terminal apparatus serves as an MTC terminal. In the communication system, in an uplink and a downlink, a multi-carrier transmission scheme such as Cyclic Prefix - Orthogonal Frequency Division Multiplexing (CP-OFDM) can be used. In the communication system, in an uplink, a transmission scheme such as Discrete Fourier Transform Spread - Orthogonal Frequency Division Multiplexing (DFTS-OFDM, which may also be referred to as SC-FDMA) may be used. Note that the following describes a case that an OFDM transmission scheme is used in the uplink and the downlink. However, this is not restrictive, and other transmission schemes can be applied.

The base station apparatus and the terminal apparatus according to the present embodiments can communicate in a frequency band for which a permission has been obtained from the government of a country or a region where a radio operator provides service, i.e., a so-called licensed band, and/or in a frequency band that does not require a permission from the government of a country or a region, i.e., a so-called unlicensed band.

In the present embodiments, "X/Y" includes the meaning of "X or Y". In the present embodiments, "X/Y" includes the meaning of "X and Y". In the present embodiments, "X/Y" includes the meaning of "X and/or Y".

### First Embodiment

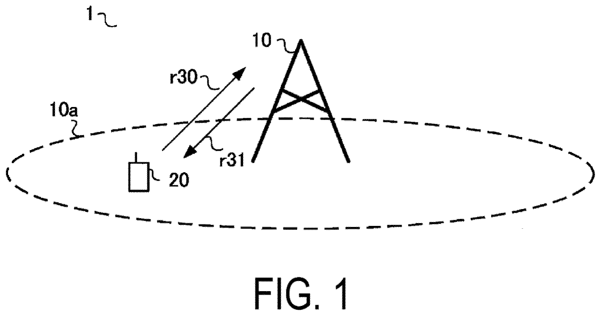

FIG. 1 is a diagram illustrating a configuration example of a communication system according to the present embodiment. A communication system 1 of the present embodiment includes a base station apparatus 10 and a terminal apparatus 20. Coverage 10a is a range (communication area) in which the base station apparatus 10 can connect to the terminal apparatus 20 (coverage 10a is also referred to as a cell). Note that the base station apparatus 10 can accommodate multiple terminal apparatuses 20 in the coverage 10a. The communication system 1 is a system in which the base station apparatus 10 and the terminal apparatus 20 can perform data modulation and demodulation by using multiple modulation schemes, such as Binary Phase Shift Keying (BPSK), quadrature Phase Shift Keying (QPSK), 16-quadrature amplitude modulation (QAM), 64QAM, or 256QAM.

In FIG. 1, uplink radio communication r30 includes at least the following uplink physical channels. The uplink physical channels are used to transmit information output from a higher layer.
- Physical Uplink Control Channel (PUCCH)
- Physical Uplink Shared Channel (PUSCH)
- Physical Random Access Channel (PRACH)

The PUCCH is a physical channel used to transmit Uplink Control Information (UCI). The uplink control information includes a positive acknowledgment (ACK)/Negative acknowledgment (NACK) for downlink data (a Downlink transport block, a Medium Access Control Protocol Data Unit (MAC PDU), a Downlink-Shared Channel (DL-SCH), or a Physical Downlink Shared Channel (PDSCH)). The ACK/NACK is also referred to as a Hybrid Automatic Repeat request ACKnowledgment (HARQ-ACK), a HARQ feedback, a HARQ acknowledgment, HARQ control information, or a signal indicating a transmission confirmation.

The uplink control information includes a Scheduling Request (SR) used to request a PUSCH (Uplink-Shared Channel (UL-SCH)) resource for initial transmission. The scheduling request includes a positive scheduling request, or a negative scheduling request. The positive scheduling request indicates to request a UL-SCH resource for initial transmission. The negative scheduling request indicates not to request the UL-SCH resource for the initial transmission.

The uplink control information includes downlink Channel State Information (CSI). The downlink channel state information includes a Rank Indicator (RI) indicating a preferable spatial multiplexing number (layer number), a Precoding Matrix Indicator (PMI) indicating a preferable precoder, a Channel Quality Indicator (CQI) specifying a preferable transmission rate, and the like. The PMI indicates a codebook determined by the terminal apparatus. The codebook is associated with precoding of a physical downlink shared channel. For the CQI, an index (CQI index) indicating a modulation scheme (e.g., QPSK, 16QAM, 64QAM, 256QAMAM, and the like), a coding rate, and spectral efficiency that are preferable in a prescribed bandwidth can be used. The terminal apparatus selects, from a CQI table, a CQI index that a PDSCH transport block could be received with block error probability not exceeding prescribed block error probability (e.g., an error rate of 0.1).

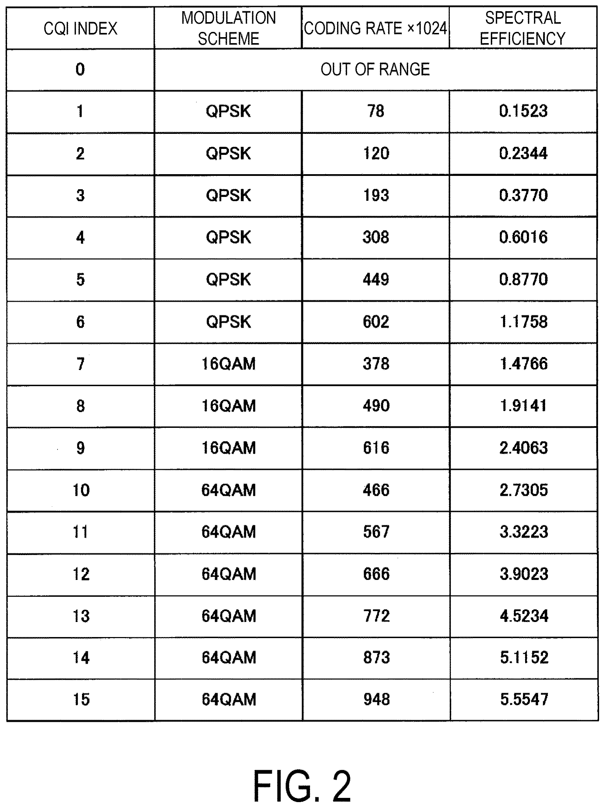

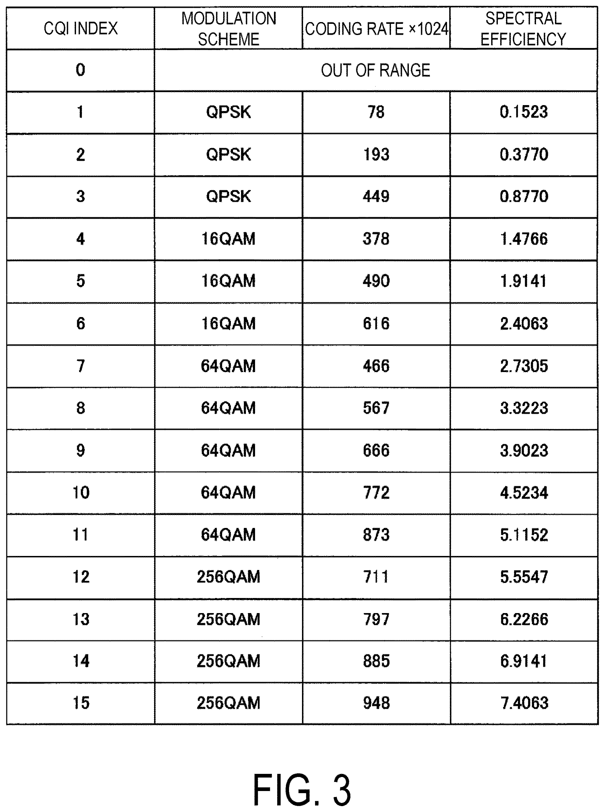

FIG. 2 is a diagram illustrating an example of a CQI table according to the present embodiment. The CQI index is associated with a modulation scheme, a coding rate, and spectral efficiency. In the CQI table (64QAM mode CQI table) of FIG. 2, the CQI index indicates QPSK, 16QAM, or 64QAM as a modulation scheme. FIG. 3 is a diagram illustrating another example of a CQI table according to the present embodiment. In the CQI table (256QAM mode CQI table) of FIG. 3, the CQI index indicates QPSK, 16QAM, 64QAM, or 256QAM as a modulation scheme. The CQI tables of FIG. 2 and FIG. 3 are shared in the communication system 1 (the base station apparatus 10 and the terminal apparatus 20). The base station apparatus 10 and the terminal apparatus 20 interpret a CQI index, based on a CQI table configured (selected) by the base station apparatus 10. Note that FIG. 2 and FIG. 3 are merely examples of CQI tables, and a table including BPSK and 1024QAM may be used. The coding rate and the spectral efficiency of FIG. 2 and FIG. 3 are merely examples, and the communication system 1 according to the present embodiment is not limited to these examples.

The PUSCH is a physical channel used to transmit uplink data (an Uplink Transport Block or an Uplink-Shared Channel (UL-SCH)). The PUSCH may be used to transmit a HARQ-ACK and/or channel state information for downlink data, as well as the uplink data. The PUSCH may be used to transmit only channel state information. The PUSCH may be used to transmit only a HARQ-ACK and channel state information.

The PUSCH is used to transmit Radio Resource Control (RRC) signaling. The RRC signaling is also referred to as an RRC message/RRC layer information/an RRC layer signal/an RRC layer parameter/an RRC information element. The RRC signaling is information/signal processed in a radio resource control layer. The RRC signaling transmitted from the base station apparatus may be signaling shared by multiple terminal apparatuses within a cell. The RRC signaling transmitted from the base station apparatus may be signaling dedicated to a certain terminal apparatus (also referred to as dedicated signaling). In other words, user-equipment-specific information (unique to user equipment) is transmitted using the signaling dedicated to a certain terminal apparatus. The RRC message can include a UE Capability of a terminal apparatus. The UE Capability is information indicating a function supported by the terminal apparatus.

The PUSCH is used to transmit a Medium Access Control Element (MAC CE). The MAC CE is information/signal processed (transmitted) in a Medium Access Control layer. For example, a power headroom may be included in the MAC CE, and may be reported via the physical uplink shared channel. In other words, a MAC CE field is used to indicate a level of the power headroom. The uplink data can include an RRC message and a MAC CE. The RRC signaling and/or the MAC CE is also referred to as higher layer signaling. The RRC signaling and/or the MAC CE is included in a transport block.

The PRACH is used to transmit a preamble used for a random access. The PRACH is used to transmit a random access preamble. The PRACH is used for indicating an initial connection establishment procedure, a handover procedure, a connection re-establishment procedure, synchronization (timing adjustment) for uplink transmission, and a request for a PUSCH (UL-SCH) resource.

In the uplink radio communication, an Uplink Reference Signal (UL RS) is used as an uplink physical signal. The uplink physical signal is not used to transmit information output from a higher layer, but is used by a physical layer. The uplink reference signal includes a Demodulation Reference Signal (DMRS) and a Sounding Reference Signal (SRS). The DMRS is associated with transmission of a physical uplink shared channel/physical uplink control channel. For example, in a case that the base station apparatus 10 demodulates a physical uplink shared channel/physical uplink control channel, the base station apparatus 10 uses the demodulation reference signal to perform channel estimation/channel compensation.

The SRS is not associated with transmission of a physical uplink shared channel/physical uplink control channel. The base station apparatus 10 uses the SRS to measure an uplink channel state (CSI Measurement).

In FIG. 1, in radio communication of a downlink r31, at least the following downlink physical channels are used. The downlink physical channels are used to transmit information output from a higher layer.
- Physical Broadcast Channel (PBCH)
- Physical Downlink Control Channel (PDCCH)
- Physical Downlink Shared Channel (PDSCH)

The PBCH is used to broadcast a Master Information Block (MIB) or a Broadcast Channel (BCH) shared by terminal apparatuses. The MIB is one of system information. For example, the MIB includes a downlink transmission bandwidth configuration and a System Frame number (SFN). The MIB may include information indicating at least a part of a slot number, a subframe number, and a radio frame number, in which the PBCH is transmitted.

The PDCCH is used to transmit Downlink Control Information (DCI). For the downlink control information, multiple formats (also referred to as DCI formats) based on applications are defined. The DCI format may be defined based on a type of DCI or the number of bits constituting one DCI format. Each format is used according to an application. The downlink control information includes control information for downlink data transmission and control information for uplink data transmission. The DCI format for downlink data transmission is also referred to as a downlink assignment (or a downlink grant). The DCI format for uplink data transmission is also referred to as an uplink grant (or an uplink assignment).

One downlink assignment is used for scheduling of one PDSCH within one serving cell. The downlink grant may be used at least for scheduling of a PDSCH in the same slot as the slot on which the downlink grant is transmitted. The downlink assignment includes downlink control information, such as resource block assignment for a PDSCH, a Modulation and Coding Scheme (MCS) for a PDSCH, a NEW Data Indicator (NDI) indicating initial transmission or retransmission, information indicating a downlink HARQ process number, and a Redudancy version indicating the amount of redundancy added to a codeword at the time of turbo coding. The codeword is data after error correction coding. The downlink assignment may include a Transmission Power Control (TPC) command for a PUCCH, a TPC command for a PUSCH, and a TPC command for a Sounding Reference Signal (SRS). Note that the SRS is herein a reference signal transmitted by the terminal apparatus so that the base station apparatus knows an uplink channel state. The uplink grant may include a Repetiton number indicating the number of times a PUSCH is repeatedly transmitted. Note that the DCI format for each downlink data transmission includes information (fields) necessary for its application, out of the information described above.

For the MCS for a PDSCH, an index (MCS index) indicating a modulation order and a Transport Block Size (TBS) index of the PDSCH can be used. The modulation order is associated with a modulation scheme. The modulation orders "2", "4", "6", and "8" indicate "QPSK", "16QAM", "64QAM", "256QAM", and "1024QAM", respectively. The TBS index is an index used to identify a transport block size of the PDSCH scheduled on the PDCCH. The communication system 1 (the base station apparatus 10 and the terminal apparatus 20) shares a table (transport block size table), with which a transport block size can be identified based on the number of resource blocks allocated to the TBS index and the PDSCH transmission.

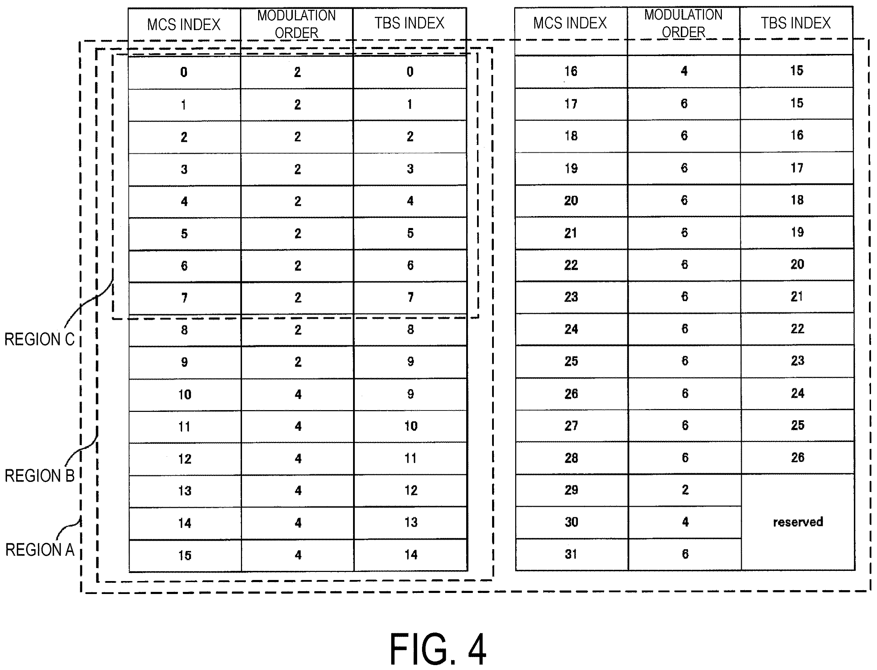

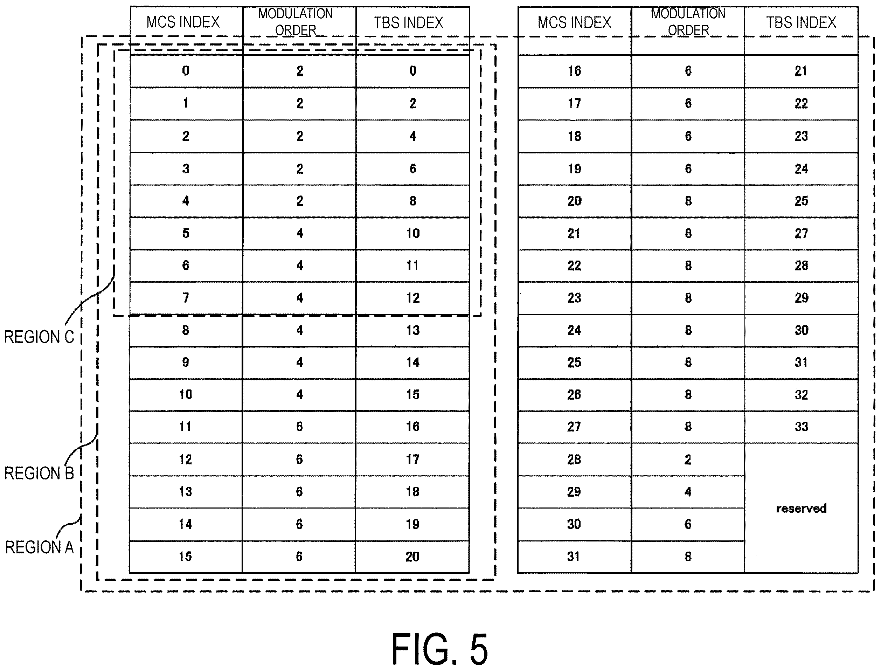

FIG. 4 is a diagram illustrating an example of an MCS table according to the present embodiment. The MCS index is associated with the modulation order and the TBS index. In the MCS table (64QAM mode MCS table) of FIG. 5, the MCS index indicates the modulation order "2", "4", or "6". FIG. 5 is a diagram illustrating another example of an MCS table according to the present embodiment. In the MCS table (256QAM mode MCS table) of FIG. 5, the MCS index indicates the modulation order "2", "4", "6", or "8". The MCS indexes with the TBS index of "reserved" can be used at the time of retransmission. The MCS tables of FIG. 4 and FIG. 5 include 32 MCS indexes. In other words, the MCS index can be expressed by 5 bits ("00000" to "11111"). Each of the MCS tables of FIG. 4 and FIG. 5 includes Region A with the MCS indexes of 0 to 31, Region B with the MCS indexes of 0 to 15, and Region C with the MCS indexes of 0 to 7. The communication system 1 of the present embodiment can restrict a selectable range of MCS indexes to Regions A to C, according to MCS restriction information (described later). Note that division of regions (valid ranges of MCS indexes selected according to the MCS restriction information) is not limited to Regions A to C of FIG. 4 and FIG. 5, and only needs to be multiple regions including MCS indexes within one MCS table.

The MCS tables of FIG. 4 and FIG. 5 are shared in the communication system 1 (the base station apparatus 10 and the terminal apparatus 20). The MCS tables of FIG. 4 and FIG. 5 are selected based on a selected CQI table. The 64QAM mode MCS table (FIG. 4) can be used as a reference table. In a case that the base station apparatus 10 does not select the 256QAM mode CQI table (FIG. 3) (in a case that the base station apparatus 10 selects the 64QAM mode CQI table (FIG. 2)), interpretation of the MCS index is based on the MCS table (i.e., the reference table) of FIG. 4 (the MCS index is interpreted through application of the 64QAM mode MCS table). In a case that the base station apparatus 10 selects the 256QAM mode CQI table, interpretation of the MCS index is based on the MCS table of FIG. 5 (the MCS index is interpreted through application of the 256QAM mode MCS table). Note that FIG. 2 and FIG. 3 are merely examples of MCS tables, and a table including BPSK and 1024QAM may be used.

The MCS tables of FIG. 4 and FIG. 5 can also be used in a case that a modulation scheme of a PUSCH is configured. The base station apparatus 10 can use an RRC message to notify the base station apparatus of "MCS table select" configuration information, which indicates which of the MCS tables of FIG. 4 and FIG. 5 is to be used for the PUSCH.

The 64QAM mode indicates a configuration (constitution) in which a modulation order of 256QAM or higher is not included as one of modulation schemes constituting an MCS table to be applied to a PDSCH, a configuration (constitution) in which modulation schemes constituting an MCS table to be applied to a PDSCH include QPSK, 16QAM, and 64QAM, a configuration (constitution) in which a modulation order of 256QAM or higher is not included as one of modulation schemes constituting a CQI table to be used for a CQI report, or a configuration (constitution) in which modulation schemes constituting a CQI table to be used for a CQI report include QPSK, 16QAM, and 64QAM, for example. The 256QAM mode indicates a configuration in which an MCS table/CQI table or the like that assumes data modulation of a PDSCH with 256QAM is used. The 256QAM mode indicates a configuration (constitution) in which 256QAM is at least included as one of modulation schemes constituting an MCS table to be applied to a PDSCH, a configuration (constitution) in which modulation schemes constituting an MCS table to be applied to a PDSCH include QPSK, 16QAM, 64QAM, and 256QAM, a configuration (constitution) in which 256QAM is included as one of modulation schemes constituting a CQI table to be used for a CQI report, or a configuration (constitution) in which modulation schemes constituting a CQI table to be used for a CQI report include QPSK, 16QAM, 64QAM, and 256QAM, for example. In the MCS table/CQI table, a change between 64QAM mode/256QAM mode is performed based on a prescribed parameter (RRC message) provided from a higher layer.

One uplink grant is used to notify the terminal apparatus of scheduling of one PUSCH within one serving cell. The uplink grant includes uplink control information, such as information related to resource block assignment to transmit a PUSCH (resource block assignment and hopping resource allocation), information related to an MCS of a PUSCH (MCS/Redundancy version), an amount of cyclic shift performed on a DMRS, information related to PUSCH retransmission, and a TPC command for a PUSCH, and downlink Channel State Information (CSI) request (CSI request). The uplink grant may include information indicating an uplink HARQ process number, a Transmission Power Control (TPC) command for a PUCCH, and a TPC command for a PUSCH. Note that the DCI format for each uplink data transmission includes information (fields) necessary for its application, out of the information described above.

The PDCCH is generated by adding a Cyclic Redundancy Check (CRC) to downlink control information. In the PDCCH, CRC parity bits are scrambled by using a prescribed identifier (scrambling is also referred to as exclusive OR operation or masking). The parity bits are scrambled with a Cell-Radio Network Temporary Identifier (C-RNTI), a Semi Persistent Scheduling (SPS) C-RNTI, a Temporary C-RNTI, a Paging (P)-RNTI, a System Information (SI)-RNTI, or a Random Access (RA)-RNTI. The C-RNTI and the SPS C-RNTI are identifiers for identifying a terminal apparatus within a cell. The Temporary C-RNTI is an identifier for identifying a terminal apparatus that has transmitted a random access preamble during a contention based random access procedure. The C-RNTI and the Temporary C-RNTI are used to control PDSCH transmission or PUSCH transmission in a single subframe. The SPS C-RNTI is used to periodically allocate a PDSCH or PUSCH resource. The P-RNTI is used to transmit a paging message (Paging Channel (PCH)). The SI-RNTI is used to transmit an SIB. The RA-RNTI is used to transmit a random access response (message 2 in a random access procedure). Note that the identifier may include an RNTI for grant-free transmission. For the RNTI for grant-free transmission, an RNTI shared by multiple specific terminal apparatuses may be used. The grant-free transmission is a transmission method in which the terminal apparatus repeatedly transmits the same PUSCH (transport block) to the base station apparatus, without dynamically allocating resources with an uplink grant. The DCI to which a CRC scrambled with an RNTI specific to grant-free transmission is added can include resource configuration for grant-free transmission (configuration parameter for a DMRS, radio resources capable of grant-free transmission, an MCS used for grant-free transmission, the number of times of repetition, and the like).

The PDSCH is used to transmit downlink data (a downlink transport block or a DL-SCH). The PDSCH is used to transmit system information message (also referred to as a System Information Block (SIB). A part or all of the SIBs can be included in an RRC message.

The PDSCH is used to transmit RRC signaling. The RRC signaling transmitted from the base station apparatus may be shared (cell-specific) by multiple terminal apparatuses within a cell. In other words, information shared by user equipment within the cell is transmitted by using RRC signaling specific to the cell. The RRC signaling transmitted from the base station apparatus may be a message dedicated to a certain terminal apparatus (also referred to as dedicated signaling). In other words, user-equipment-specific information (unique to user equipment) is transmitted by using a message dedicated to a certain terminal apparatus.

The PDSCH is used to transmit a MAC CE. The RRC signaling and/or the MAC CE is also referred to as higher layer signaling. A PMCH is used to transmit multicast data (Multicast Channel (MCH)).

In the downlink radio communication of FIG. 1, a Synchronization signal (SS) and a Downlink Reference Signal (DL RS) are used as downlink physical signals. The downlink physical signals are not used to transmit information output from a higher layer, but are used by a physical layer.

The synchronization signal is used for the terminal apparatus to establish synchronization in the frequency domain and the time domain in the downlink. The downlink reference signal is used for the terminal apparatus to perform channel estimation/channel compensation of a downlink physical channel. For example, the downlink reference signal is used to demodulate a PBCH, a PDSCH, and a PDCCH. The downlink reference signal can also be used for the terminal apparatus to measure a downlink channel state (CSI measurement).

The downlink physical channel and the downlink physical signal are also collectively referred to as a downlink signal. The uplink physical channel and the uplink physical signal are also collectively referred to as an uplink signal. The downlink physical channel and the uplink physical channel are also collectively referred to as a physical channel. The downlink physical signal and the uplink physical signal are also collectively referred to as a physical signal.

The BCH, the UL-SCH, and the DL-SCH are transport channels. Channels used in the MAC layer are referred to as transport channels. A unit of the transport channel used in the MAC layer is also referred to as a Transport Block (TB) or a MAC Protocol Data Unit (PDU). The transport block is a unit of data that the MAC layer delivers to the physical layer. In the physical layer, the transport block is mapped to a codeword, and coding processing and the like are performed on each codeword.

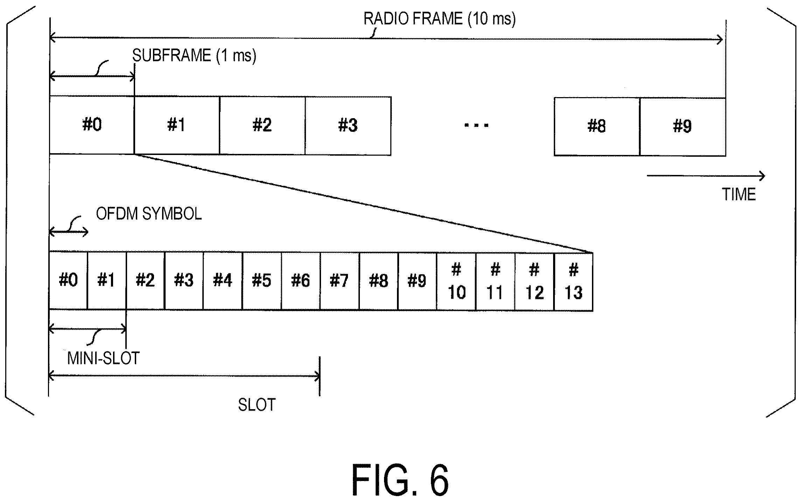

FIG. 6 is a diagram illustrating an example of a radio frame configuration of the communication system 1 according to the present embodiment. One radio frame is defined to have a length of 10 ms in a fixed manner. One subframe is defined to have a length of 1 ms in a fixed manner. One radio frame includes 10 subframes. One slot is defined by the number of OFDM symbols. The number of slots included in one subframe varies depending on the number of OFDMs included in one slot. FIG. 6 is an example in which one slot includes seven OFDM symbols, which make a slot length 0.5 ms. In this case, one subframe includes two subframes. One mini-slot is defined by the number of OFDM symbols. The number of OFDM symbols included in a mini-slot is smaller than the number of OFDM symbols included in a slot. FIG. 6 is an example in which one mini-slot includes two OFDM symbols. In the communication system 1, a physical channel is mapped to radio resources in each slot or each mini-slot. Note that, in a case that communication is performed by using DFT-s-OFDM, the OFDM symbol serves as a Single Carrier - Frequency Division Multiple Access (SC-FDMA) symbol.

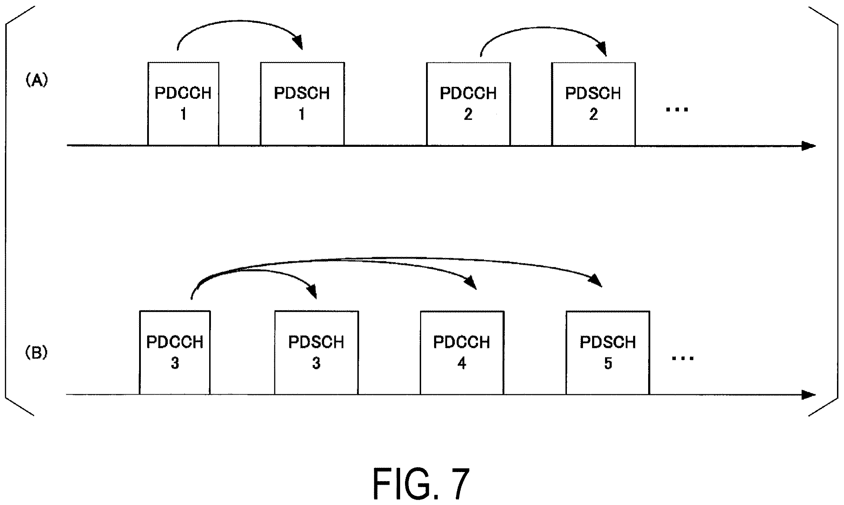

The base station apparatus 10 performs scheduling for determining radio resources to which a physical channel transmitted by the base station apparatus 10 and the terminal apparatus 20 is mapped. For the scheduling method, dynamic scheduling (DS) and Semi-Persistent Scheduling (SPS) are used. In DS, frequency/time/spatial resources of a PDSCH/PUSCH are dynamically allocated. In SPS, frequency/time/spatial resources of a PDSCH/PUSCH are allocated in a certain cycle. FIG. 7 is a diagram illustrating examples of a scheduling method according to the present embodiment. FIG. 7(A) is an example of downlink DS. PDCCH 1 and PDCCH 2 are downlink assignments for DS. CRCs of PDCCH 1 and PDCCH 2 are scrambled with a C-RNTI. In a case that the base station apparatus 10 transmits PDSCH 1, the base station apparatus 10 transmits, to the terminal apparatus 20, DCI indicating resource block assignment for mapping PDSCH 1, an MCS, and the like on PDCCH 1. Based on the DCI included in PDCCH 1, the terminal apparatus 20 interprets the resource block assignment for PDSCH 1 and the MCS to perform detection processing of PDSCH 1. In a case that the base station apparatus 10 transmits PDSCH 2, the base station apparatus 10 transmits, to the terminal apparatus 20, DCI indicating resource block assignment for mapping PDSCH 2, an MCS, and the like on PDCCH 2. Based on the DCI included in PDCCH 2, the terminal apparatus 20 interprets the resource block assignment for PDSCH 2 and the MCS to perform detection processing of PDSCH 2. In this manner, in DS, the base station apparatus transmits control information of a PDSCH for each transmitted PDSCH.

FIG. 7(B) is an example of downlink SPS. PDCCH 3 is a downlink assignment for SPS. A CRC of PDCCH 3 is scrambled with an SPS C-RNTI. The base station apparatus 10 transmits SPS configuration information by using an RRC message. The SPS configuration information includes a scheduling interval of a PDSCH, and an SPS C-RNTI associated with the transmission interval. In a case that the base station apparatus 10 transmits a PDSCH by using SPS, the base station apparatus 10 transmits, to the terminal apparatus 20, PDCCH 3 including the CRC scrambled by using the SPS C-RNTI. The terminal apparatus 20 that has decoded PDCCH 3 detects PDSCH 5 from PDSCH 3 transmitted with the scheduling interval, based on control information included in the PDCCH.

The base station apparatus 10 performs scheduling of a PUSCH in a similar manner. In this case, PDSCH 1 and PDSCH 2 in FIG. 7(A) are replaced by PUSCH 1 and PUSCH 2. PDCCH 1 and PDCCH 2 are uplink grants for PDSCH 1 and PDSCH 2, respectively. PDSCH 3, PDSCH 4, and PDSCH 5 in FIG. 7(B) are replaced by PUSCH 3, PUSCH 4, and PUSCH 5. PDCCH 3 is an uplink grant for PDSCH 3 to PDSCH 5. Note that SPS is not limited to the method of FIG. 7(B), but is a concept also encompassing repetition transmission of grant-free transmission (a scheme in which the same PDSCH (transport block) is repeatedly transmitted). In this case, configuration for grant-free transmission, such as the number of times of repetition, is transmitted on PDCCH 3/RRC message.

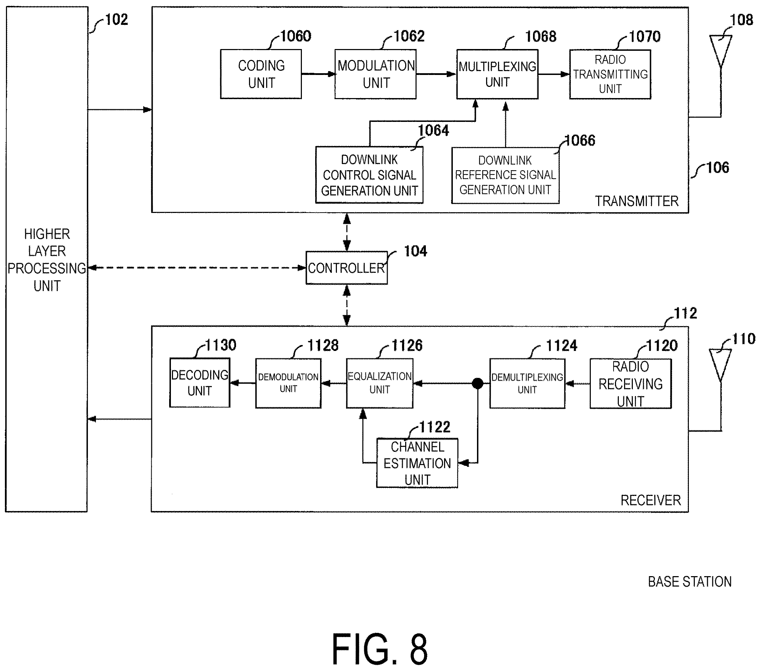

FIG. 8 is a schematic block diagram of a configuration of the base station apparatus 10 according to the present embodiment. The base station apparatus 10 is configured including a higher layer processing unit (higher layer processing step) 102, a controller (control step) 104, a transmitter (transmission step) 106, a transmit antenna 108, a receive antenna 110, and a receiver (reception step) 112. The transmitter 106 generates a physical downlink channel, according to a logical channel input from the higher layer processing unit 102. The transmitter 106 is configured, including a coding unit (coding step) 1060, a modulation unit (modulation step) 1062, a downlink control signal generation unit (downlink control signal generation step) 1064, a downlink reference signal generation unit (downlink reference signal generation step) 1066, a multiplexing unit (multiplexing step) 1068, and a radio transmitting unit (radio transmission step) 1070. The receiver 112 detects (demodulates or decodes, for example) a physical uplink channel, and inputs the contents of the physical uplink channel to the higher layer processing unit 102. The receiver 112 is configured, including a radio receiving unit (radio reception step) 1120, a channel estimation unit (channel estimation step) 1122, a demultiplexing unit (demultiplexing step) 1124, an equalization unit (equalization step) 1126, a demodulation unit (demodulation step) 1128, and a decoding unit (decoding step) 1130.

The higher layer processing unit 102 performs processing of higher layers over a physical layer, such as a Medium Access Control (MAC) layer, a Packet Data Convergence Protocol (PDCP) layer, a Radio Link Control (RLC) layer, and a Radio Resource Control (RRC) layer. The higher layer processing unit 102 generates information necessary for controlling the transmitter 106 and the receiver 112, and outputs the generated information to the controller 104. The higher layer processing unit 102 outputs downlink data (a DL-SCH or the like), system information (an MIB or an SIB), or the like to the transmitter 106.

The higher layer processing unit 102 generates, or acquires from a higher node, system information (a part of an MIB or an SIB) to be broadcast. The higher layer processing unit 102 outputs the system information to be broadcast to the transmitter 106, as a BCH/DL-SCH. The MIB is mapped to a PBCH in the transmitter 106. The SIB is mapped to a PDSCH in the transmitter 106. The higher layer processing unit 102 generates, or acquires from a higher node, system information (SIB) specific to a terminal apparatus. The higher layer processing unit may include, in the SIB, information related to an application, such as eMBB/uRLLC/mMTC. The SIB is mapped to a PDSCH in the transmitter 106.

The higher layer processing unit 102 configures various RNTIs for each terminal apparatus. The RNTI is used for encrypting (scrambling) of a PDCCH, a PDSCH, or the like. The higher layer processing unit 102 outputs the RNTI to the controller 104/the transmitter 106/the receiver 112.

The higher layer processing unit 102 generates, or acquires from a higher node, downlink data (a transport block or a DL-SCH) to be mapped to a PDSCH, system information (System Information Block (SIB)) specific to a terminal apparatus, an RRC message, a MAC CE, and the like, and outputs the downlink data and the like to the transmitter 106. The higher layer processing unit 102 manages various configuration information of the terminal apparatus 20. Note that a part of the functions of the radio resource control may be performed in the MAC layer and the physical layer.

The RRC message includes configuration information of a CQI report (also referred to as a CSI report). The configuration information of a CQI report includes configuration information of "CQI table selection". The "CQI table selection" is information indicating which CQI table of the CQI table for the 64QAM mode (64QAM mode CQI table) and the CQI table for the 256QAM mode (256QAM mode CQI table) is to be used. A state in which the 256QAM mode CQI table is configured with "CQI table selection" indicates that the CQI table of FIG. 3 is applied and a CQI report is performed for the terminal apparatus 20 in a slot in which the 256QAM mode CQI table is configured. A state in which the 256QAM mode CQI table is not configured with "CQI table selection" indicates that the CQI table of FIG. 2 is applied and a CQI report is performed for the terminal apparatus 20 in a slot in which the 256QAM mode CQI table is not configured.

The SPS configuration information included in an RRC message includes downlink MCS restriction configuration information. The downlink MCS restriction information is information for restricting a range of configurable MCS indexes (modulation schemes) in an MCS table selected based on configuration of "CQI table selection". For example, the MCS restriction configuration information is information indicating values of the n-th power of (1/2) (n is 0, 1,...). In FIGS. 3 and 4, the MCS restriction configuration information is configured as "1", "1/2", or "1/4". The MCS restriction configuration information "1" indicates that all of the MCS indexes within the MCS table (Region A of FIGS. 3 and 4) can be selected (indicates that an MCS index can be selected from the MCS indexes of 0 to 31 in FIG. 3 and FIG. 4). The MCS restriction configuration information "1/2" indicates that a range is restricted to a range of 1/2 including the Least Significant Bit (LSB) out of all of the MCS indexes within the MCS table (Region B of FIGS. 3 and 4) (indicates that a range is restricted to a range of the MCS indexes of 0 to 15 in FIG. 3 and FIG. 4). The MCS restriction configuration information "1/4" indicates that a range is restricted to a range of 1/4 including the Least Significant Bit (LSB) out of all of the MCS indexes within the MCS table (Region C of FIGS. 3 and 4) (indicates that a range is restricted to a range of the MCS indexes of 0 to 7 in FIG. 3 and FIG. 4).

A state in which the MCS restriction configuration information "1", "1/2", or "1/4" is configured can be used as a condition indicating that activation of SPS is validated (activated to be valid). The higher layer processing unit 102 can configure "0" as the MCS restriction configuration information. A state in which the MCS restriction configuration information "0" is configured can be used as a condition indicating that deactivation (release) of SPS is validated. Note that the MCS restriction configuration information may be applied only in a case that "CQI table selection" selects a reference table. The MCS restriction configuration information may be applied only in a case that "CQI table selection" is configured for all of the slots.

The SPS configuration information included in an RRC message can include uplink MCS restriction configuration information. The uplink MCS restriction information is information for restricting a range of configurable MCS indexes (modulation schemes) in an MCS table selected based on configuration of the "MCS table select". The uplink MCS restriction configuration information "0", "1", "1/2", and "1/4" indicates configuration similar to those of the downlink MCS restriction configuration information.

The higher layer processing unit 102 receives information related to a terminal apparatus, such as a function (UE capability) supported by of the terminal apparatus, from the terminal apparatus 20 (via the receiver 112). The terminal apparatus 20 transmits its function to the base station apparatus 10 with higher layer signaling (RRC signaling). The information related to a terminal apparatus includes information indicating whether the terminal apparatus supports a prescribed function, or information indicating that the terminal apparatus has completed introduction and testing of a prescribed function. Whether a prescribed function is supported includes whether introduction and testing of a prescribed function have been completed.

In a case that a terminal apparatus supports a prescribed function, the terminal apparatus transmits information (parameters) indicating whether the terminal apparatus supports the prescribed function. In a case that a terminal apparatus does not support a prescribed function, the terminal apparatus may be configured not to transmit information (parameters) indicating whether the terminal apparatus supports the prescribed function. In other words, whether the prescribed function is supported is reported by whether information (parameters) indicating whether the prescribed function is supported is transmitted. Note that the information (parameters) indicating whether a prescribed function is supported may be reported by using one bit of 1 or 0.

The UE capability includes information indicating whether the terminal apparatus 20 supports 256QAM mode CQI report configuration in the uplink/downlink. The higher layer processing unit 102/the controller 104 performs the 256QAM mode CQI report configuration, based on the UE capability. The UE capability includes information indicating whether the terminal apparatus 20 supports SPS in the uplink/downlink. The higher layer processing unit 102/the controller 104 performs configuration of DS/SPS, based on the UE capability.

The higher layer processing unit 102 receives, from the terminal apparatus 20, a CSI report (Aperiodic CSI) included in a PDSCH via the receiver 112. The higher layer processing unit 102 inputs the CQI index included in the CSI report to the controller 104.

The higher layer processing unit 102 acquires, from the receiver 112, a DL-SCH from decoded uplink data (also including a CRC). The higher layer processing unit 102 performs error detection on the uplink data transmitted by the terminal apparatus. For example, the error detection is performed in the MAC layer.

The controller 104 performs control of the transmitter 106 and the receiver 112, based on various configuration information input from the higher layer processing unit 102/the receiver 112. The controller 104 generates downlink control information (DCI), based on the configuration information input from the higher layer processing unit 102/the receiver 112, and outputs the generated DCI to the transmitter 106. The controller 104 determines an MCS of a PDSCH, in consideration of the CSI report (Aperiodic CQI/Periodic CQI) input from the higher layer processing unit 102/the receiver 112. The controller 104 determines an MCS index corresponding to the MCS of the PDSCH. The controller 104 applies an MCS table selected based on "CQI table selection", and determines an MCS index for the PDSCH. The controller 104 includes the determined MCS index in a downlink assignment.

The controller 104 determines an MCS of a PUSCH, in consideration of channel quality information (CSI Measurement results) measured by the channel estimation unit 1122. The controller 104 determines an MCS index corresponding to the MCS of the PUSCH. The controller 104 applies an MCS table selected based on the "MCS table select" for the uplink, and determines an MCS index for the PUSCH. The controller 104 includes the determined MCS index in an uplink grant.

In a case that the controller 104 transmits an MCS index in DCI (downlink assignment/uplink grant) including a CRC scrambled with a C-RNTI (in a case that the controller 104 transmits a PDSCH/PUSCH in DS), the controller 104 determines a preferable MCS index from the entire range of the MCS table, irrespective of the MCS restriction information. In contrast, in a case that the controller 104 transmits an MCS index in DCI (downlink assignment/uplink grant) including a CRC scrambled with an SPS S-RNTI (in a case that the controller 104 transmits a PDSCH/PUSCH in SPS), the controller 104 determines a preferable MCS index from a range of the MCS table according to the MCS restriction information. In the tables of FIG. 4 and FIG. 5, in a case that "MCS restriction information" is "1", the MCS index is selected from "00000" to "11111". In a case that "MCS restriction information" is "1/2", the MCS index is selected from "00000" to "01111" (the most significant bit of the MCS index is set to "0"). In a case that "MCS restriction information" is "1/4", the MCS index is selected from "00000" to "00111" (the two most significant bits of the MCS index are set to "0").

Note that the MCS restriction information may be transmitted in DCI. For example, in a case that the MCS restriction configuration information is selected from "0", "1", "1/2", and "1/4", each value is expressed by two bits. Specifically, "0" may be expressed as "00", "1/4" may be expressed as "01", "1/2" may be expressed as "10", and " 1" may be expressed as "11". Note that a part of the functions of the controller 104 can be included in the higher layer processing unit 102.

The transmitter 106 generates a PBCH, a PDCCH, a PDSCH, a downlink reference signal, and the like, according to a signal input from the higher layer processing unit 102/the controller 104. The coding unit 1060 performs coding (including repetition), such as block coding, convolutional coding, and turbo coding, on the BCH, the DL-SCH, and the like input from the higher layer processing unit 102, by using a coding scheme that is determined in advance/that is determined by the higher layer processing unit 102. The coding unit 1060 punctures coded bits, based on a coding rate input from the controller 104. The modulation unit 1062 performs data modulation on the coded bits input from the coding unit 1060 with a modulation scheme (modulation order) that is determined in advance/that is input from the controller 104, such as BPSK, QPSK, 16QAM, 64QAM, and 256QAM. The modulation order is based on the MCS index selected by the controller 104.

The downlink control signal generation unit 1064 adds a CRC to the DCI input from the controller 104. The downlink control signal generation unit 1064 performs encrypting (scrambling) on the CRC, by using an RNTI. The downlink control signal generation unit 1064 further performs QPSK modulation on the DCI to which the CRC is added, and generates a PDCCH. The downlink control signal generation unit 1064 adds a CRC scrambled by using a C-RNTI to the DCI, to thereby generate PDCCH 1 and PDCCH 2 (FIG. 7(A)) for DS. The downlink control signal generation unit 1064 adds a CRC scrambled by using an SPS C-RNTI to the DCI, to thereby generate PDCCH 3 (FIG. 7(B)) for SPS. The downlink reference signal generation unit 1066 generates a known sequence of the terminal apparatus as a downlink reference signal. The known sequence is determined according to a rule that is determined in advance based on a physical cell identity or the like for identifying the base station apparatus 10.

The multiplexing unit 1068 multiplexes modulated symbols of each channel input from the PDCCH/the downlink reference signal/the modulation unit 1062. In other words, the multiplexing unit 1068 maps the PDCCH/the downlink reference signal/modulated symbols of each channel to resource elements. The mapped resource elements are controlled by downlink scheduling input from the controller 104. The resource element is a minimum unit of a physical resource, which includes one OFDM symbol and one subcarrier. Note that, in a case of performing MIMO transmission, the transmitter 106 includes as many coding units 1060 and modulation units 1062 as the number of layers. In this case, the higher layer processing unit 102 configures an MCS for each transport block of each layer.

The radio transmitting unit 1070 performs Inverse Fast Fourier Transform (IFFT) on the multiplexed and modulated symbols and the like to generate OFDM symbols. The radio transmitting unit 1070 adds cyclic prefixes (CPs) to the OFDM symbols to generate a baseband digital signal. The radio transmitting unit 1070 further converts the digital signal into an analog signal, removes unnecessary frequency components through filtering, performs up-conversion to a carrier frequency, performs power amplification, and outputs the resultant signal to the transmit antenna 108 for transmission.

In accordance with an indication from the controller 104, the receiver 112 detects (demultiplexes, demodulates, or decodes) the signal received from the terminal apparatus 20 via the receive antenna 110, and inputs the decoded data to the higher layer processing unit 102/the controller 104. The radio receiving unit 1120 converts an uplink signal received via the receive antenna 110 into a baseband signal by means of down-conversion, removes unnecessary frequency components, controls an amplification level in such a manner as to suitably maintain a signal level, performs orthogonal demodulation, based on an in-phase component and an orthogonal component of the received signal, and converts the orthogonally-demodulated analog signal into a digital signal. The radio receiving unit 1120 removes a portion corresponding to the CP from the converted digital signal. The radio receiving unit 1120 performs Fast Fourier Transform (FFT) on the signal from which the CP has been removed, and extracts a signal in the frequency domain. The signal in the frequency domain is output to the demultiplexing unit 1124.

The demultiplexing unit 1124 demultiplexes the signal input from the radio receiving unit 1120 into as signal such as a PUSCH, a PUCCH, and an uplink reference signal, based on uplink scheduling information (uplink data channel allocation information or the like) input from the controller 104. The demultiplexed uplink reference signal is input to the channel estimation unit 1122. The demultiplexed PUSCH and PUCCH are output to the equalization unit 1126.

The channel estimation unit 1122 estimates a frequency response (or a delay profile), by using the uplink reference signal. The results of the frequency response obtained through channel estimation for demodulation are input to the equalization unit 1126. The channel estimation unit 1122 performs measurement of an uplink channel state (measurement of Reference Signal Received Power (RSRP), Reference Signal Received Quality (RSRQ), or a Received Signal Strength Indicator (RSSI)), by using the uplink reference signal. The measurement of the uplink channel state is used to determine an MCS for the PUSCH, for example.

The equalization unit 1126 performs processing of compensating for influence in a channel, based on the frequency response input from the channel estimation unit 1122. As a method of compensation, any existing channel compensation technique can be applied, such as a method of multiplication with MMSE weights and MRC weights, and a method of applying an MLD. The demodulation unit 1128 performs demodulation processing, based on information of a modulation scheme that is determined in advance/that is indicated by the controller 104. Note that, in a case that DFT-s-OFDM is used in the downlink, the demodulation unit 1128 performs demodulation processing on the result obtained by IDFT processing is performed on a signal output from the equalization unit 1126.

The decoding unit 1130 performs decoding processing on a signal output from the demodulation unit, based on information of a coding rate that is determined in advance/a coding rate that is indicated by the controller 104. The decoding unit 1130 inputs the decoded data (a UL-SCH or the like) to the higher layer processing unit 102.

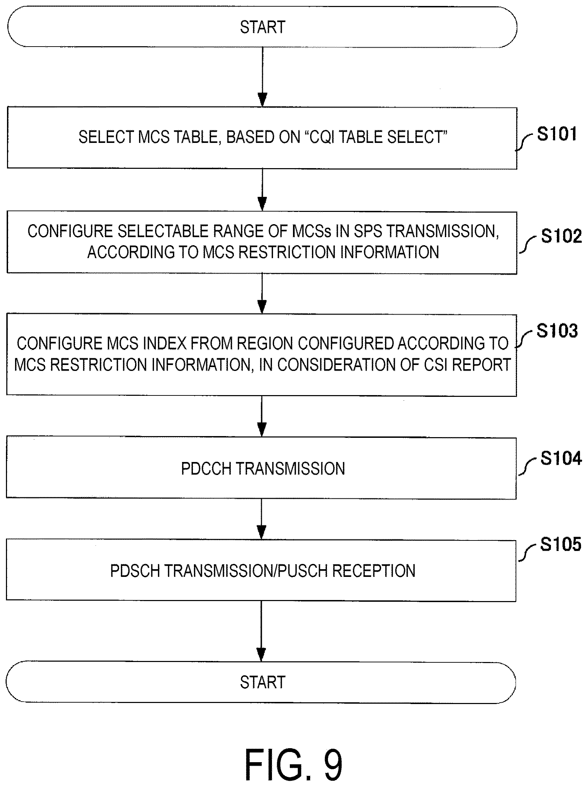

FIG. 9 is a diagram illustrating a flow of MCS index configuration example in SPS according to the present embodiment. The higher layer processing unit 102 selects an MCS table, based on configuration information of "CQI table selection" (S101). Next, MCS restriction information, which indicates a region of the MCS table selected in S101, is configured (S102). Next, an MCS index is configured from the region indicated by the MCS restriction information, in consideration of a CSI index included in a CSI report (SI04). Then, DCI (downlink assignment/uplink grant) including the MCS index is generated. Furthermore, a PDCCH including the DCI to which a CRC scrambled with an SPS C-RNTI is added is transmitted (S104). After transmission of the PDCCH, PDSCH transmission or PUSCH reception is periodically performed at a transmission interval indicated by SPS configuration information (SI05).

In the manner described above, in the present embodiment, an MCS table to be used for configuration of an MCS of a PDSCH and a PUSCH transmitted in SPS is determined. A selectable range of MCS indexes within the MCS table can be flexibly changed, according to the MCS restriction information. Thus, a selectable range of the MCS and selectable granularity of the MCS can be adjusted, according to an amount of data of the periodically transmitted PDSCH and PUSCH.

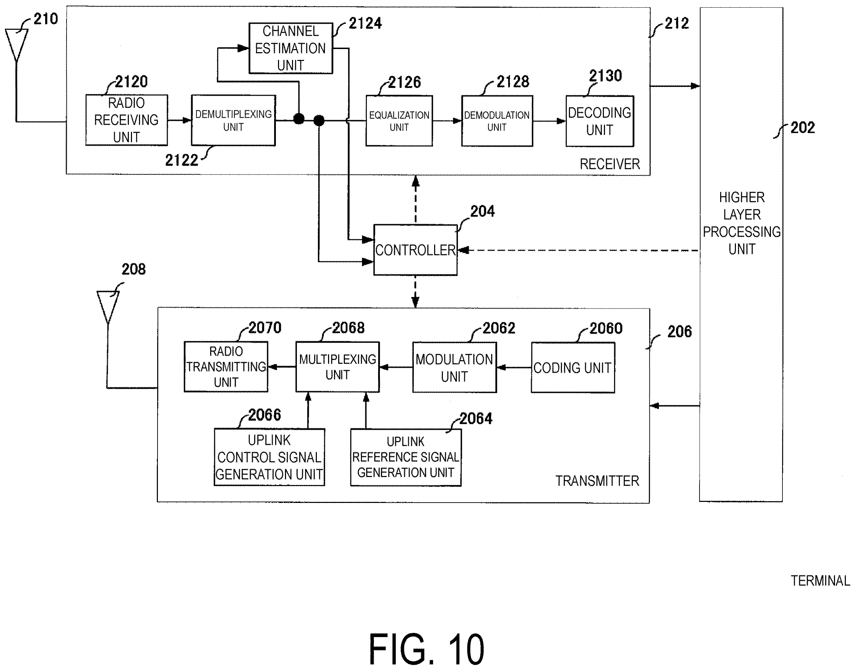

FIG. 10 is a schematic block diagram illustrating a configuration of the terminal apparatus 20 according to the present embodiment. The terminal apparatus 20 is configured, including a higher layer processing unit (higher layer processing step) 202, a controller (control step) 204, a transmitter (transmission step) 206, a transmit antenna 208, a receive antenna 210, and a receiver (reception step) 212.

The higher layer processing unit 202 performs processing of a medium access control (MAC) layer, a packet data convergence protocol (PDCP) layer, a radio link control (RLC) layer, and a radio resource control (RRC) layer. The higher layer processing unit 202 manages various configuration information of the terminal apparatus 20. The higher layer processing unit 202 notifies the base station apparatus 10 of information (UE Capability) indicating a terminal apparatus function supported by the terminal apparatus 20, via the transmitter 206. The higher layer processing unit 202 notifies of the UE Capability with RRC signaling. For example, the UE Capability includes information indicating whether 256QAM mode CQI report configuration is supported.

The higher layer processing unit 202 acquires, from the receiver 212, measurement results (CSI measurement results) of a downlink channel state.

The higher layer processing unit 202 acquires, from the receiver 212, an RRC message transmitted by the base station apparatus 10. The RRC message includes configuration information of a CQI report. The configuration information of a CQI report includes configuration information of "CQI table selection". Based on a CQI table (the CQI table of FIG. 2 or FIG. 3) indicated by the "CQI table selection", as well as based on the CSI measurement results, the higher layer processing unit 202 selects, from the CQI table, a CQI index that a PDSCH transport block could be received with block error probability not exceeding prescribed block error probability (e.g., an error rate of 0.1). The higher layer processing unit 202 generates a CQI report including the CQI index (Aperiodic CQI). Note that the higher layer processing unit 202 may select a CQI index from a range of modulation orders indicated by MCS restriction information.

The CQI report configuration information includes configuration information (a CQI report interval or the like) of periodicity of a CQI report (Periodic CQI). The configuration information related to the periodicity is input to the controller 204, together with the CQI index. The CQI index included in the Periodic CQI is included in UCI. The higher layer processing unit 202 inputs the "CQI table selection" to the controller 204.

The RRC message includes SPS configuration information. The higher layer processing unit 202 inputs, to the controller 204, an SPS C-RNTI, an SPS transmission interval, and MCS restriction information included in the SPS configuration information. In a case that the MCS restriction information is "1/4", "1/2", or "1", the controller 204 determines that activation of configuration of SPS is valid. In a case that the MCS restriction information is "0", the controller 204 determines that deactivation (release) of configuration of SPS is validated. Note that, in a case that the MCS restriction information is included in DCI, the controller 204 may determine validity of activation/deactivation of SPS. The validity of activation/deactivation of SPS may be comprehensively determined by using a parameter included in the DCI, as well as the MCS restriction information.

The higher layer processing unit 202 acquires, from the receiver 212, decoded data such as a DL-SCH and a BCH. The higher layer processing unit 202 generates a HARQ-ACK, based on error detection results of the DL-SCH. The higher layer processing unit 202 generates an SR. The higher layer processing unit 202 generates UCI including an HARQ-ACK/SR/CSI (including a CQI report). The higher layer processing unit 202 inputs the UCI and a UL-SCH to the transmitter 206. Note that a part of the functions of the higher layer processing unit 202 may be included in the controller 204.

The controller 204 controls a CQI report (Aperiodic CQI) to be transmitted in the UCI, in accordance with the configuration information of periodicity. The controller 204 interprets downlink control information (DCI) received via the receiver 212. The controller 204 controls the transmitter 206, in accordance with scheduling of a PUSCH/MCS index/Transmission Power Control (TPC) or the like acquired from DCI for uplink transmission. The controller 204 controls the receiver 212, in accordance with scheduling of a PDSCH/MCS index or the like acquired from DCI for downlink transmission. The controller 204 performs PDSCH reception and PUCCH transmission, based on validity of set/release of the SPS.

The transmitter 206 is configured, including a coding unit (coding step) 2060, a modulation unit (modulation step) 2062, an uplink reference signal generation unit (uplink reference signal generation step) 2064, an uplink control signal generation unit (uplink control signal generation step) 2066, a multiplexing unit (multiplexing step) 2068, and a radio transmitting unit (radio transmission step) 2070.

The coding unit 2060 performs coding, such as convolutional coding, block coding, and turbo coding, on uplink data (a UL-SCH) input from the higher layer processing unit 202, in accordance with control of the controller 204 (in accordance with a coding rate calculated based on the MCS index).

The modulation unit 2062 modulates the coded bits input from the coding unit 2060 with a modulation scheme that is indicated by the controller 204/a modulation scheme that is determined in advance for each channel, such as BPSK, QPSK, 16QAM, 64QAM, and 256QAM (generates modulated symbols for the PUSCH). Note that, in a case that DFT-S-OFDM is used, Discrete Fourier Transform (DFT) processing is performed after modulation.

The uplink reference signal generation unit 2064 generates a sequence that is determined according to a predetermined rule (formula), based on a physical cell identity (PCI) (also referred to as a cell ID or the like) for identifying the base station apparatus 10, a bandwidth in which the uplink reference signal is mapped, a cyclic shift, a parameter value for generation of a DMRS sequence, and the like, in accordance with an indication from the controller 204.

In accordance with an indication from the controller 204, the uplink control signal generation unit 2066 codes the UCI and performs BPSK/QPSK modulation on the coded UCI to generate modulated symbols for a PUCCH.

In accordance with uplink scheduling information from the controller 204 (a transmission interval in SPS for the uplink included in an RRC message, resource allocation included in DCI, or the like), the multiplexing unit 2068 multiplexes modulated symbols for the PUSCH, modulated symbols for the PUCCH, and the uplink reference signal for each transmit antenna port (i.e., each signal is mapped to resource elements).

The radio transmitting unit 2070 performs Inverse Fast Fourier Transform (IFFT) on the multiplexed signal to generate OFDM symbols. The radio transmitting unit 2070 adds CPs to the OFDM symbols to generate a baseband digital signal. The radio transmitting unit 2070 further converts the baseband digital signal into an analog signal, removes unnecessary frequency components, performs conversion to a carrier frequency by means of up-conversion, performs power amplification, and transmits the resultant signal to the base station apparatus 10 via the transmit antenna 208.

The receiver 212 is configured, including a radio receiving unit (radio reception step) 2120, a demultiplexing unit (demultiplexing step) 2122, a channel estimation unit (channel estimation step) 2144, an equalization unit (equalization step) 2126, a demodulation unit (demodulation step) 2128, and a decoding unit (decoding step) 2130.

The radio receiving unit 2120 converts a downlink signal received via the receive antenna 210 into a baseband signal by means of down-conversion, removes unnecessary frequency components, controls an amplification level in such a manner as to suitably maintain a signal level, performs orthogonal demodulation, based on an in-phase component and an orthogonal component of the received signal, and converts the orthogonally-demodulated analog signal into a digital signal. The radio receiving unit 2120 removes a portion corresponding to the CP from the converted digital signal, performs FFT on the signal from which the CP has been removed, and extracts a signal in the frequency domain.

The demultiplexing unit 2122 demultiplexes the extracted signal in the frequency domain into a downlink reference signal, a PDCCH, a PDSCH, and PBCH. The channel estimation unit 2124 estimates a frequency response (or a delay profile), by using the downlink reference signal (a DM-RS or the like). The results of the frequency response obtained through channel estimation for demodulation are input to the equalization unit 1126. The channel estimation unit 2124 performs measurement of uplink channel state (measurement of Reference Signal Received Power (RSRP), Reference Signal Received Quality (RSRQ), a Received Signal Strength Indicator (RSSI), and a Signal to Interference plus Noise power Ratio (SINR)), by using downlink reference signal (a CSI-RS or the like). The measurement of the downlink channel state is used to determine an MCS for the PUSCH, for example. The measurement results of the downlink channel state are used to determine a CQI index, for example.

The equalization unit 2126 generates equalizing weights based on the MMSE criterion, from the frequency response input from the channel estimation unit 2124. The equalization unit 2126 multiplies the signal (the PUCCH, the PDSCH, the PBCH, or the like) input from the demultiplexing unit 2122 by the equalizing weights. The demodulation unit 2128 performs demodulation processing, based on information of a modulation order that is determined in advance/that is indicated by the controller 204.

The decoding unit 2130 performs decoding processing on a signal output from the demodulation unit 2128, based on information of a coding rate that is determined in advance/a coding rate that is indicated by the controller 204. The decoding unit 2130 inputs the decoded data (a DL-SCH or the like) to the higher layer processing unit 202.

According to one or more aspects of the present invention, the base station apparatus and the terminal apparatus perform MCS table selection in configuration of an MCS in SPS, by using the common MCS tables to those in DS. Then, in a selected MCS table, a selection range of MCS indexes within the MCS table is configured, according to MCS restriction information. With this configuration, a selection range of MCS indexes can be changed, with the use of one MCS table. As a result, the base station apparatus and the terminal apparatus can select a modulation scheme and schedule radio resources, corresponding to packets having various amounts of data periodically and aperiodically generated with various delays.

### Second Embodiment

The present embodiment is an example of a case that, in MCS configuration in SPS, a configurable range of MCS indexes is changed by switching MCS tables applied in DS. The communication system 1 (FIG. 1) according to the present embodiment includes the base station apparatus 10 (FIG. 8) and the terminal apparatus 20 (FIG. 10). The communication system 1 (the base station apparatus 10 and the terminal apparatus 20) according to the present embodiment shares the CQI tables of FIG. 2 and FIG. 3 and MCS tables of FIG. 4 and FIG. 5. The CQI table of FIG. 2 is associated with the MCS table of FIG. 4. The CQI table of FIG. 3 is associated with the MCS table of FIG. 5. The difference/addition from/to the first embodiment will be mainly described below.

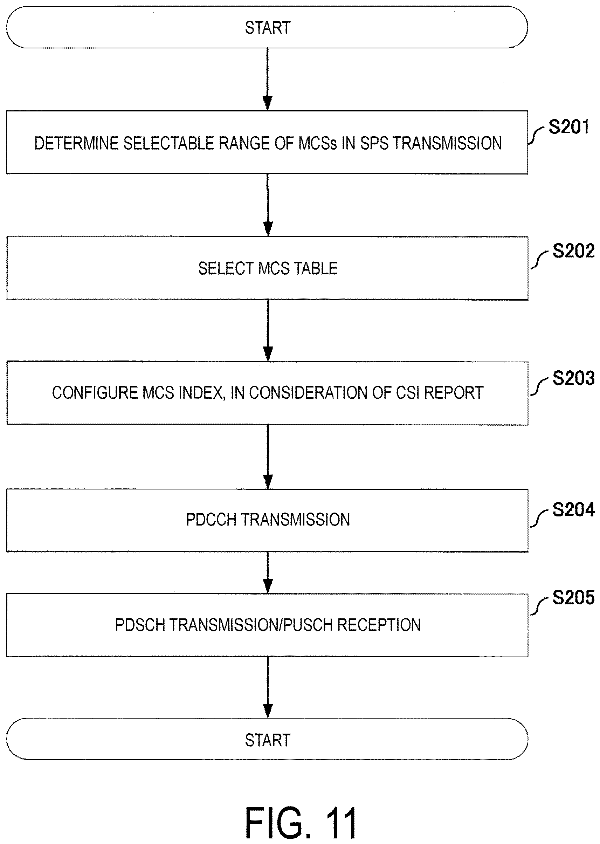

FIG. 11 is a diagram illustrating a flow of MCS index configuration example in SPS according to the present embodiment. The higher layer processing unit 102 of the base station apparatus 10 determines a selectable range of MCS indexes in SPS (S201). In the communication system 1 (the base station apparatus 10 and the base station apparatus 10) according to the present embodiment, a configuration that a selectable range of MCS indexes in SPS is shared in reference to a selectable range of MCS indexes in DS. For example, information that a selectable range of MCS indexes in SPS is 1/2 of selectable MCS indexes in DS is shared by the base station apparatus 10 and the base station apparatus 10 in advance. For example, in a case that tables of the MCS tables of FIG. 4 and FIG. 5 are used and transmission is performed in SPS, the base station apparatus 10 can select an MCS index from Region B. In this case, in the MCS table of FIG. 4, an MCS index can be selected from a range up to the maximum of 16QAM. In the MCS table of FIG. 5, an MCS index can be selected from a range up to the maximum of 64QAM. In contrast, in a case that transmission is performed in DS, the base station apparatus 10 selects an MCS index from Region A. Note that restriction on the selectable range of MCS indexes in SPS is not limited to 1/2.

The selectable range of MCS indexes in SPS may be configured to be associated with a UE category included in UE Capability. The UE category is a parameter indicating the maximum number of bits that the UE can receive in a DL-SCH transport block/a parameter indicating the maximum number of bits that the UE can transmit in a UL-SCH transport block. In the communication system 1 (the base station apparatus 10 and the terminal apparatus 20), the selectable range of MCS indexes in SPS is determined for each UE category. The base station apparatus 10 can interpret the selectable range of MCS indexes in SPS, by using the UE category received from the terminal apparatus 20.

Next, the higher layer processing unit 102 of the base station apparatus 10 selects an MCS table to be used for PDSCH transmission/PUSCH transmission in SPS (S202). The higher layer processing unit 102 selects an MCS table, according to a range of MCSs necessary for the PDSDH transmission/PUSCH transmission. For example, an MCS table is selected based on an amount of data of the PDSDH transmission/PUSCH transmission, or the like. An MCS table for the PDSCH transmission is configured, using "CQI table selection". In a case that modulation schemes of a maximum of 16QAM are used in the PDSDH transmission/PUSCH transmission in SPS, the higher layer processing unit 102 configures the 64QAM mode CQI table, using "CQI table selection". In a case that modulation schemes of a maximum of 64QAM are used in the PDSDH transmission/PUSCH transmission in SPS, the higher layer processing unit 102 configures the 256QAM mode CQI table (FIG. 3), using "CQI table selection". The higher layer processing unit 102 transmits CQI report configuration information including "CQI table selection". The base station apparatus 10 can notify the terminal apparatus 20 of indication of the CQI table and the MCS table to be used for the PDSCH transmission, using the "CQI table selection". Note that the higher layer processing unit 102 of the base station apparatus 10 may report the MCS table to be used for the PDSCH transmission by transmitting MCS table configuration information for SPS with an RRC message (e.g., SPS configuration information) for selecting an MCS table to be used for PDSDH transmission/PUSCH transmission in SPS. The higher layer processing unit 102 configures which of the 64QAM mode MCS table and the 256QAM mode CQI table is to be used, using the MCS table configuration information for SPS.

The base station apparatus 10 receives a CSI report including a CQI index from the terminal apparatus 20. The higher layer processing unit 102 of the base station apparatus 10 configures an MCS, in consideration of the CQI index (S203). In a case that the higher layer processing unit 102 selects the MCS table of FIG. 4 in S202, the higher layer processing unit 102 selects an MCS index from modulation schemes up to 16QAM included in Region B of the table. In contrast, in a case that the higher layer processing unit 102 selects the MCS table of FIG. 5 in S202, the higher layer processing unit 102 selects an MCS index from modulation schemes up to 64QAM included in Region B of the table. In this manner, the higher layer processing unit 102 selects an MCS index from a range of "00000" to "01111" (the most significant bit is set to "0"), irrespective of which of the table of FIG. 3 or FIG. 4 the higher layer processing unit 102 selects.

The controller 104 generates DCI necessary for the PDSCH/PUSCH transmission including the MCS index selected in S203. The controller 104 generates a PDCCH including the DCI to which a CRC scrambled with an SPS C-RNTI is added, and transmits the PDCCH to the terminal apparatus 20 (S204). The base station apparatus 10 further transmits a PDSCH or receives a PUSCH, based on the DCI indicated by the PDCCH (S205).

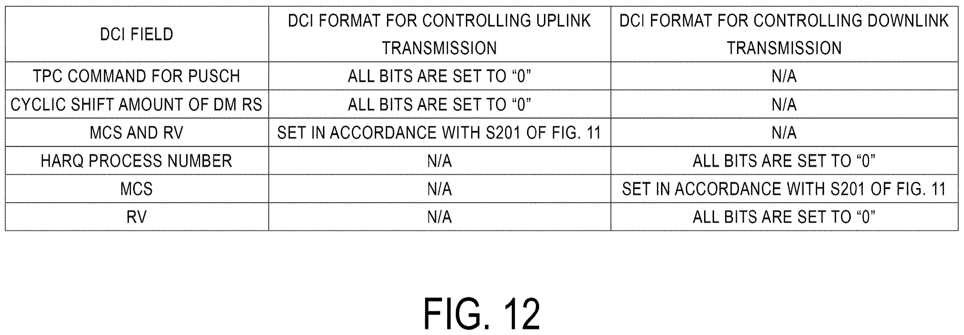

The communication system 1 according to the present embodiment may indicate validity of activation/deactivation of SPS, using the DCI. FIG. 12 is an example illustrating parameters (fields) of DCI indicating validity of activation of SPS. In DCI for controlling uplink transmission, the controller 104 sets all of the bits of a field of the TPC command for PUSCH and a field of the cyclic shift amount of DM RS to "0". The controller 204 further sets the Modulation and Coding Scheme (MCS) and Redundancy Version (RV) field (i.e., the MCS index), in accordance with S201. In S201, in a case that it is determined that a selectable range of MCS indexes in SPS is Region B, the controller 104 sets the most significant bit to "0" in the MCS and RV field. By fulfilling these conditions, the controller 104 can indicate validity of activation of uplink SPS.

In DCI for controlling downlink transmission, the controller 104 sets all of the bits of the HARQ process number field and the RV field to "0". The controller 204 further sets the bits of the MCS (the MCS index), in accordance with S201. In S201, in a case that it is determined that a selectable range of MCS indexes in SPS is Region B, the controller 104 sets the most significant bit to "0" in the MCS field. By fulfilling these conditions, the controller 104 can indicate validity of activation of downlink SPS.

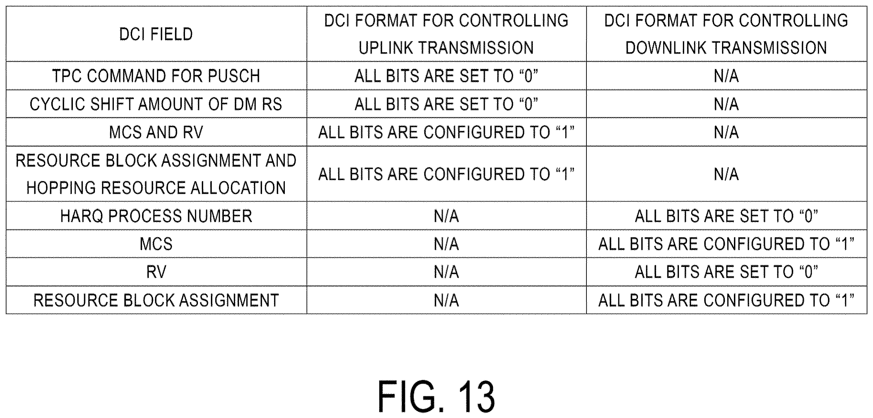

FIG. 13 is an example illustrating parameters (fields) of DCI indicating validity of deactivation of SPS. In DCI for controlling uplink transmission, the controller 104 sets all of the bits of a field of the TPC command for PUSCH and a field of the cyclic shift amount of DM RS to "0". The controller 104 sets the Modulation and Coding Scheme (MCS) and Redundancy Version (RV) field (i.e., the MCS index) to all "1". The controller 104 further sets the resource block assignment and hopping resource allocation field to all "1". By fulfilling these conditions, the controller 104 can indicate validity of deactivation of uplink SPS.

In DCI for controlling downlink transmission, the controller 104 sets all of the bits of the HARQ process number field and the RV field to "0". The controller 204 further sets the MCS (the MCS index) to all "1". The controller 104 further sets the resource block assignment and hopping resource allocation field to all "1". By fulfilling these conditions, the controller 104 can indicate validity of deactivation of downlink SPS. Note that, in grant-based repetition transmission, the Repetiton number field included in DCI may be used as a condition for indicating activation/deactivation of SPS. For example, as a condition for indicating deactivation of SPS, the communication system 1 uses that the Repetiton number field is set to all "0".

The controller 204 of the terminal apparatus 20 interprets the MCS index included in the DCI for SPS, based on the information ("CQI table selection"/"MCS table select") related to selection related to an MCS table transmitted from the base station apparatus 10. The controller 204 further determines activation/deactivation of SPS, in accordance with the conditions of FIG. 12 and FIG. 13 in the fields included in the DCI. Note that FIG. 12 and FIG. 13 describe a case that the field of the TPC command for PUSCH, the field of the cyclics shift amount of DMRS, and the MCS and RV field are used to indicate validity of activation/deactivation of SPS, but only a part of these fields may be used. For example, validity of activation/deactivation of SPS may be indicated by using the field of the TPC command for PUSCH and the MCS and RV field. Validity of activation/deactivation of SPS may be indicated by using the field of the TPC command for USCH, the Repetiton number field, and the MCS and RV field.

In the manner described above, the communication system according to the present embodiment configures a selectable range of MCSs in SPS transmission in a fixed manner in multiple MCS tables. A selectable maximum modulation scheme can be switched by switching an MCS table to be applied for a PDSCH/PUSCH. With this configuration, the field (MCS/RV) associated with the MCS in the DCI can be used to indicate activation/deactivation of SPS.

Embodiment 1 and Embodiment 2 describe a method of restricting a selectable range of MCS indexes, in a case that a PDSCH/PUSCH is transmitted in SPS (in a case that a PDCCH is generated by DCI to which a CRC scrambled with an SPS C-RNTI is added). However, a selectable range of MCS indexes can be restricted with a similar mechanism, also in a case that a PDSCH/PUSCH is transmitted in DS (in a case that a PDCCH is generated by DCI to which a CRC scrambled with a C-RNTI is added). The method of restricting a selectable range of MCS indexes described in Embodiment 1 and Embodiment 2 can be used at the time of selecting an MCS index from a restricted range within one MCS table, in a case that grant-free transmission of repeatedly transmitting the same PUSCH (the same transport block) is performed. The method of restricting a selectable range of MCS indexes described in Embodiment 1 and Embodiment 2 can be used at the time of using multiple MCS tables and selecting an MCS index from a restricted range within the MCS tables, in a case that grant-free transmission of repeatedly transmitting the same PUSCH (the same transport block) is performed.

Note that the configuration information of "CQI table selection", "MCS table select", and "MCS restriction information" in Embodiment 1 and Embodiment 2 are collectively referred to as "configuration information related to selection of an MCS table".

Note that one aspect of the present invention can also adopt the following aspects.
(1) One aspect of the present invention is a base station apparatus for communicating with a terminal apparatus, the base station apparatus including: a transmitter configured to transmit configuration information related to selection of an MCS table to the terminal apparatus; and a controller configured to apply the MCS table selected based on the configuration information related to selection of the MCS table to configure an MCS index of a PDSCH, wherein the MCS index is information for indicating an MCS of the PDSCH, the MCS index is selected from a range of MCS indexes restricted to a part of MCSs within the MCS table, the controller configures multiple MCS selectable ranges including multiple MCS indexes selected out of the MCS table, the range of MCS indexes restricted to the part of MCSs is one of the multiple MCS selectable ranges that are variably controlled by the controller, the configuration information related to selection of the MCS table includes information for indicating which of a first MCS table and a second MCS table is to be applied, the first MCS table includes at least a first modulation scheme, and an MCS index associated with the first modulation scheme, the first modulation scheme includes QPSK, 16QAM, and 64QAM, the second MCS table includes at least a second modulation scheme, and the MCS index associated with the second modulation scheme, and the second modulation scheme includes the QPSK, the 16QAM, the 64QAM, and 256QAM.
(2) In one aspect of the present invention, the configuration information related to selection of the MCS table includes MCS restriction information, and the MCS restriction information is information for indicating the range of MCS indexes restricted to the part of MCSs.
(3) In one aspect of the present invention, the transmitter transmits a PDCCH including the MCS index of the PDSCH, in a case that the transmitter transmits a PDCCH to which a CRC scrambled with an SPS C-RNTI is added, the range of MCS indexes restricted to the part of MCSs is fixed to one of the multiple MCS selectable ranges, and a selectable range of MCS indexes of the PDSCH is changed by controlling the MCS table selected based on the configuration information related to selection of the MCS table.
(4) In one aspect of the present invention, the transmitter transmits a PDCCH including the MCS index of the PDSCH, in a case that a CRC scrambled with an SPS C-RNTI is added to the PDCCH, the controller applies the first MCS table to configure the MCS index of the PDSCH, irrespective of the configuration information related to selection of the MCS table, and the multiple MCS selectable ranges include MCS indexes selected from the first MCS table, and in a case that a CRC scrambled with a C-RNTI is added to the PDCCH, the controller applies the MCS table selected based on the configuration information related to selection of the MCS table, and configures the MCS index of the PDSCH out of all MCS indexes included in the MCS table.
(5) In one aspect of the present invention, the range of MCS indexes restricted to the part of MCSs is a range of MCS indexes of values of n-th power of (1/2), the transmitter transmits a PDCCH including the MCS index of the PDSCH, in a case that a CRC scrambled with an SPS C-RNTI is added to the PDCCH, the controller applies the first MCS table to configure the MCS index of the PDSCH, irrespective of the configuration information related to selection of the MCS table, and in a case that a CRC scrambled with a C-RNTI is added to the PDCCH, the controller configures the n to "1", and applies the MCS table selected based on the configuration information related to selection of the MCS table to configures the MCS index of the PDSCH.
(6) In one aspect of the present invention, the transmitter transmits a PDCCH including the MCS index of the PDSCH, and in a case that a CRC scrambled with an SPS C-RNTI is added to the PDCCH, and the n is 0, it is indicated that release of transmission of the PDSCH by using SPS is valid.
(7) In one aspect of the present invention, the transmitter transmits a PDCCH including the MCS index of the PDSCH, in a case that the transmitter transmits a PDCCH to which a CRC scrambled with an SPS C-RNTI is added, the range of MCS indexes restricted to the part of MCSs is fixed to one of values of n-th power of (1/2), and a selectable range of MCS indexes of the PDSCH is changed by controlling the MCS table selected based on the configuration information related to selection of the MCS table.
(8) In one aspect of the present invention, in a case that the transmitter transmits a PDCCH to which a CRC scrambled with an SPS C-RNTI is added, and n most significant bits among bits indicating the MCS index included in the PDCCH are set to "0", it is indicated that activation of transmission of the PDSCH by using SPS is valid.
(9) In one aspect of the present invention, in a case that the transmitter transmits a PDCCH to which the CRC scrambled with the SPS C-RNTI is added, and bits indicating the MCS index included in the PDCCH are set to all "1", it is indicated that release of transmission of the PDSCH by using SPS is valid.
(10) One aspect of the present invention is a communication method for a base station apparatus for communicating with a terminal apparatus, the communication method including: a transmission step of transmitting configuration information related to selection of an MCS table to the terminal apparatus; and a control step of applying the MCS table selected based on the configuration information related to selection of the MCS table to configure an MCS index of a PDSCH, wherein the MCS index is information for indicating an MCS of the PDSCH, the MCS index is selected from a range of MCS indexes restricted to a part of MCSs within the MCS table, the range of MCS indexes restricted to the part of MCSs is a range of MCS indexes of values of n-th power of (1/2), the range of MCS indexes of values of n-th power of (1/2) being variably controlled in the control step, the configuration information related to selection of the MCS table includes information for indicating which of a first MCS table and a second MCS table is to be applied, the first MCS table includes at least a first modulation scheme, and an MCS index associated with the first modulation scheme, the first modulation scheme includes QPSK, 16QAM, and 64QAM, the second MCS table includes at least a second modulation scheme, and the MCS index associated with the second modulation scheme, and the second modulation scheme includes the QPSK, the 16QAM, the 64QAM, and 256QAM.
(11) In one aspect of the present invention, the base station apparatus transmits a PDCCH including the MCS index of the PDSCH, in a case that a CRC scrambled with an SPS C-RNTI is added to the PDCCH, the range of MCS indexes restricted to the part of MCSs is fixed to one of the values of n-th power of (1/2), and a selectable range of MCS indexes of the PDSCH is changed by controlling the MCS table selected based on the configuration information related to selection of the MCS table.

According to the above, the base station apparatus and the terminal apparatus can select a modulation scheme and schedule radio resources, corresponding to packets having various amounts of data periodically generated with various delays.

A program running on an apparatus according to one aspect of the present invention may serve as a program that controls a Central Processing Unit (CPU) and the like to cause a computer to operate in such a manner as to realize the functions of the above-described embodiments according to one aspect of the present invention. Programs or the information handled by the programs are temporarily read into a volatile memory, such as a Random Access Memory (RAM) while being processed, or stored in a non-volatile memory, such as a flash memory, or a Hard Disk Drive (HDD), and then read by the CPU to be modified or rewritten, as necessary.

Note that the apparatuses in the above-described embodiments may be partially enabled by a computer. In that case, a program for realizing the functions of the embodiments may be recorded on a computer-readable recording medium. This configuration may be realized by causing a computer system to read the program recorded on the recording medium for execution. It is assumed that the "computer system" herein refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, and the like.

Moreover, the "computer-readable recording medium" may include a medium that dynamically retains a program for a short period of time, such as a communication line that is used for transmission of the program over a network such as the Internet or over a communication line such as a telephone line, and may also include a medium that retains a program for a fixed period of time, such as a volatile memory within the computer system for functioning as a server or a client in such a case. Furthermore, the program may be configured to realize some of the functions described above, and also may be configured to be capable of realizing the functions described above in combination with a program already recorded in the computer system.

Furthermore, each functional block or various characteristics of the apparatuses used in the above-described embodiments may be implemented or performed on an electric circuit, that is, typically an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor or may be a processor of known type, a controller, a micro-controller, or a state machine instead. The above-mentioned electric circuit may include a digital circuit, or may include an analog circuit. Furthermore, in a case that with advances in semiconductor technology, a circuit integration technology appears that replaces the present integrated circuits, it is also possible to use an integrated circuit based on the technology.

Note that the invention of the present patent application is not limited to the above-described embodiments. In the embodiments, apparatuses have been described as an example, but the invention of the present patent application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses, for example.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

### Industrial Applicability

One aspect of the present invention can be preferably used in a base station apparatus, a terminal apparatus, and a communication method. One aspect of the present invention can be utilized, for example, in a communication system, communication equipment (for example, a cellular phone apparatus, a base station apparatus, a radio LAN apparatus, or a sensor device), an integrated circuit (for example, a communication chip), or a program.

### Reference Signs List

10 Base station apparatus
20 Terminal apparatus
10a Range in which base station apparatus 10 can connect to terminal apparatus
102 Higher layer processing unit
104 Controller
106 Transmitter
108 Transmit antenna
110 Receive antenna
112 Receiver
1060 Coding unit
1062 Modulation unit
1064 Downlink control signal generation unit
1066 Downlink reference signal generation unit
1068 Multiplexing unit
1070 Radio transmitting unit
1120 Radio receiving unit
1122 Channel estimation unit
1124 Demultiplexing unit
1126 Equalization unit
1128 Demodulation unit
1130 Decoding unit
202 Higher layer processing unit
204 Controller
206 Transmitter
208 Transmit antenna
210 Receive antenna
212 Receiver
2060 Coding unit
2062 Modulation unit
2064 Uplink reference signal generation unit
2066 Uplink control signal generation unit
2068 Multiplexing unit
2070 Radio transmitting unit
2120 Radio receiving unit
2122 Demultiplexing unit
2124 Channel estimation unit
2126 Equalization unit
2128 Demodulation unit
2130 Decoding unit

## Claims

1. A base station apparatus for communicating with a terminal apparatus, the base station apparatus comprising:
a transmitter configured to transmit configuration information related to selection of an MCS table to the terminal apparatus; and
a controller configured to apply the MCS table selected based on the configuration information related to selection of the MCS table to configure an MCS index of a PDSCH, wherein
the MCS index is information for indicating an MCS of the PDSCH,
the MCS index is selected from a range of MCS indexes restricted to a part of MCSs within the MCS table,
the controller configures multiple MCS selectable ranges including multiple MCS indexes selected out of the MCS table,
the range of MCS indexes restricted to the part of MCSs is one of the multiple MCS selectable ranges that are variably controlled by the controller,
the configuration information related to selection of the MCS table includes information for indicating which of a first MCS table and a second MCS table is to be applied,
the first MCS table includes at least a first modulation scheme, and an MCS index associated with the first modulation scheme,
the first modulation scheme includes QPSK, 16QAM, and 64QAM,
the second MCS table includes at least a second modulation scheme, and the MCS index associated with the second modulation scheme, and
the second modulation scheme includes the QPSK, the 16QAM, the 64QAM, and 256QAM.

2. The base station apparatus according to claim 1, wherein
the configuration information related to selection of the MCS table includes MCS restriction information, and
the MCS restriction information is information for indicating the range of MCS indexes restricted to the part of MCSs.

3. The base station apparatus according to claim 1 or 2, wherein
the transmitter transmits a PDCCH including the MCS index of the PDSCH,
in a case that the transmitter transmits a PDCCH to which a CRC scrambled with an SPS C-RNTI is added, the range of MCS indexes restricted to the part of MCSs is fixed to one of the multiple MCS selectable ranges, and
a selectable range of MCS indexes of the PDSCH is changed by controlling the MCS table selected based on the configuration information related to selection of the MCS table.

4. The base station apparatus according to claim 1 or 2, wherein
the transmitter transmits a PDCCH including the MCS index of the PDSCH,
in a case that a CRC scrambled with an SPS C-RNTI is added to the PDCCH, the controller applies the first MCS table to configure the MCS index of the PDSCH, irrespective of the configuration information related to selection of the MCS table, and the multiple MCS selectable ranges include MCS indexes selected from the first MCS table, and
in a case that a CRC scrambled with a C-RNTI is added to the PDCCH, the controller applies the MCS table selected based on the configuration information related to selection of the MCS table, and configures the MCS index of the PDSCH out of all MCS indexes included in the MCS table.

5. The base station apparatus according to claim 1 or 2, wherein
the range of MCS indexes restricted to the part of MCSs is a range of MCS indexes of values of n-th power of (1/2),
the transmitter transmits a PDCCH including the MCS index of the PDSCH,
in a case that a CRC scrambled with an SPS C-RNTI is added to the PDCCH, the controller applies the first MCS table to configure the MCS index of the PDSCH, irrespective of the configuration information related to selection of the MCS table, and
in a case that a CRC scrambled with a C-RNTI is added to the PDCCH, the controller configures the n to "1", and applies the MCS table selected based on the configuration information related to selection of the MCS table to configure the MCS index of the PDSCH.

6. The base station apparatus according to claim 5, wherein
the transmitter transmits a PDCCH including the MCS index of the PDSCH, and in a case that a CRC scrambled with an SPS C-RNTI is added to the PDCCH, and the n is 0, it is indicated that release of transmission of the PDSCH by using SPS is valid.

7. The base station apparatus according to claim 1 or 2, wherein
the transmitter transmits a PDCCH including the MCS index of the PDSCH,
in a case that the transmitter transmits a PDCCH to which a CRC scrambled with an SPS C-RNTI is added, the range of MCS indexes restricted to the part of MCSs is fixed to one of values of n-th power of (1/2), and
a selectable range of MCS indexes of the PDSCH is changed by controlling the MCS table selected based on the configuration information related to selection of the MCS table.

8. The base station apparatus according to claim 7, wherein
in a case that the transmitter transmits a PDCCH to which a CRC scrambled with an SPS C-RNTI is added, and n most significant bits among bits indicating the MCS index included in the PDCCH are set to "0", it is indicated that activation of transmission of the PDSCH by using SPS is valid.

9. The base station apparatus according to claim 8, wherein
in a case that the transmitter transmits a PDCCH to which the CRC scrambled with the SPS C-RNTI is added, and bits indicating the MCS index included in the PDCCH are set to all "1", it is indicated that release of transmission of the PDSCH by using SPS is valid.

10. A communication method for a base station apparatus for communicating with a terminal apparatus, the communication method comprising:
a transmission step of transmitting configuration information related to selection of an MCS table to the terminal apparatus; and
a control step of applying the MCS table selected based on the configuration information related to selection of the MCS table to configure an MCS index of a PDSCH, wherein
the MCS index is information for indicating an MCS of the PDSCH,
the MCS index is selected from a range of MCS indexes restricted to a part of MCSs within the MCS table,
the range of MCS indexes restricted to the part of MCSs is a range of MCS indexes of values of n-th power of (1/2), the range of MCS indexes of values of n-th power of (1/2) being variably controlled in the control step,
the configuration information related to selection of the MCS table includes information for indicating which of a first MCS table and a second MCS table is to be applied,
the first MCS table includes at least a first modulation scheme, and an MCS index associated with the first modulation scheme,
the first modulation scheme includes QPSK, 16QAM, and 64QAM,
the second MCS table includes at least a second modulation scheme, and the MCS index associated with the second modulation scheme, and
the second modulation scheme includes the QPSK, the 16QAM, the 64QAM, and 256QAM.

11. The communication method according to claim 10, wherein
the base station apparatus transmits a PDCCH including the MCS index of the PDSCH,
in a case that a CRC scrambled with an SPS C-RNTI is added to the PDCCH, the range of MCS indexes restricted to the part of MCSs is fixed to one of the values of n-th power of (1/2), and
a selectable range of MCS indexes of the PDSCH is changed by controlling the MCS table selected based on the configuration information related to selection of the MCS table.
